(19) Europäisches Patentamt
European Patent Office
Office européen des brevets

(11) **EP 2 716 605 A1**

(12) **EUROPEAN PATENT APPLICATION**
published in accordance with Art. 153(4) EPC

(43) Date of publication:
**09.04.2014 Bulletin 2014/15**

(51) Int Cl.:
***C01B 33/38*** *(2006.01)*

(21) Application number: **12737312.4**

(22) Date of filing: **28.05.2012**

(86) International application number:
**PCT/ES2012/070391**

(87) International publication number:
**WO 2012/164131 (06.12.2012 Gazette 2012/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.06.2011 ES 201130925**

(71) Applicant: **Nanobiomatters Research & Development, S.L.**
**46980 Paterna (Valencia) (ES)**

(72) Inventors:
• **LAGARÓN CABELLO, José María**
  **E-46980 Paterna (Valencia) (ES)**

• **NÚÑEZ, Eugenia**
  **E-46980 Paterna (Valencia) (ES)**
• **BUSOLO PONS, María**
  **E-46980 Paterna (Valencia) (ES)**
• **SÁNCHEZ-GARCÍA, María Dolores**
  **E-46980 Paterna (Valencia) (ES)**

(74) Representative: **Pons Ariño, Angel**
  **Pons Patentes y Marcas Internacional, S.L.**
  **Glorieta Rubén Dario 4**
  **28010 Madrid (ES)**

(54) **NANOCOMPOSITE MATERIALS BASED ON METAL OXIDES HAVING MULTI-FUNCTIONAL PROPERTIES**

(57) The invention relates to nanocomposite materials comprising nanoclays as a support for metal oxide particles that confer multi-functional properties on the materials. The aforementioned properties are obtained by means of the formulation of a specific type of additives based on sheets of natural and/or synthetic clays which are interspersed with metal oxides having antimicrobial and/or oxygen sequestering and/or catalytic and/or self-cleaning and/or antiabrasion capacities, and which can also optionally contain other organic, metal or inorganic compounds or a combination thereof, for compatibilisation and/or dispersion and/or increasing the functionality of the metal oxides and/or providing new functions, including both passive physical reinforcement functions and active functions, such as biocidal, antioxidant and chemical species absorption functions. In addition, the invention relates to the use of said materials for multi-sectoral uses.

EP 2 716 605 A1

## Description

The present invention relates to nanocomposite materials comprising nanoclays as support of metal oxide particles which give the materials multifunctional properties. Said properties are obtained through the formulation of a specific type of additives based on layers of natural and/or synthetic clays which are intercalated with metal oxides with antimicrobial and/or oxygen sequestrating and/or catalytic and/or self-cleaning and/or anti-abrasive capacity; and which may optionally contain other organic, metal, inorganic compounds or combination thereof which may exercise a role of compatibilization and/or dispersion and/or increase in the functionality of the metal oxides and/or providing new functionalities, both passive of physical strengthening and active such as biocide character, antioxidant and chemical-species absorbers.

It further discloses the formulation of nanocomposite materials based on the incorporation of said additives in a plastic or ceramic matrix, by any method of manufacturing or processing of plastics or preparation and processing of ceramic powders. Thus, the additives are incorporated in plastic matrices by methods of deposition and evaporation of the solvent (e.g. coatings and lamination), application of the monomeric solution followed by polymerization and curing or crosslinking or vulcanization, operations typically used during the formulation of thermostable materials and elastomers, by melt mixing processes (e.g. extrusion, injection, blowing) and/or methods of polymerization in-situ.

The nanocomposite materials with plastic matrix can be prepared by different processes typically used in the processing and manufacturing of plastics, such as casting and/or rolling (dissolution and evaporation of the solvent), melt mixing, formulation of thermostable materials and elastomers and *in-situ* polymerization techniques for their advantageous application in antimicrobial, antioxidant, self-cleaning and oxygen sequestrating plastic objects, in surgical equipment, coatings, containers as well as for applications in other sectors.

In the case of the nanocomposite materials with ceramic matrix, these additives are incorporated during the powder preparation processes typically used in the manufacturing of ceramic products that involve grinding, atomization, pressing or extrusion, enamelling in the case of enamelled products and firing.

Furthermore, the present invention relates to the use of said materials for multi-sector applications.

## PRIOR ART

In the field of polymers, one of the areas of greatest interest is the development of composite materials, and more specifically clay-based nanocomposites. There are different techniques for preparing nanocomposites, using the casting method (Ogata N, Jimenez G, Kawai H, Ogihara T; J Polym Sci Part B: Polym Phys 1997), the melt mixing method *(*Sinha Ray S, Yamada K, Okamoto M, Ueda K. Nano Lett 2002; 2: 1093 - 6*)* and the *in-situ* polymerization method (Messersmith PB, Giannelis EP. Chem Mater 1993; 5: 1064 - 6*)*. Furthermore, these nanocomposites and their processing techniques are disclosed, for example, in patent US 4739007; and more specifically regarding the present invention in WO2007074184A1. This PCT patent application discloses a new manufacturing route for nanocomposites which may or may not be biodegradable, with antimicrobial properties based on natural products and/or with capacity for fixation or controlled release of other active or bioactive substances. These nanocomposites based on phyllosilicates and/or synthetic layered double hydroxides are intercalated with different organic modifiers, and once incorporated in thermoplastic and/or thermostable matrices, they are capable of improving the gas and vapour barrier properties. The aforementioned documents are some examples of patents and literature on polymer and clay nanocomposites prepared from modified clays. These documents disclose a nanocomposite material such as an exfoliated or intercalated plate, with tactoid structure of nanometric dimensions, comprising intercalated clay dispersed in a polymer matrix, such as an oligomer, a polymer or a mixture thereof.

For example, patent US4739007 discloses the preparation of Nylon-6-clay nanocomposites from montmorillonites treated with alkylammonium salts by the melt mixing method.

Metal oxides and hydroxides have been used since ancient times for the preparation of pigments and for the extraction of metal elements. At present, they are also used in other more specific uses, derived from their physical properties and their chemical behaviour.

Titanium dioxide in its anatase crystallized form is known for having photocatalytic properties which contribute to accelerating the degradation reactions of the organic matter due to the effect of ultraviolet light. This compound is used in anti-stain applications in coatings in the textile industry and also in the glass materials industry.

Zinc oxide is known for its antimicrobial properties and is used in the manufacturing of antiseptic pomades and cosmetics products. It, likewise, has excellent properties in ultraviolet, for which reason it is used as a protector pigment against ultraviolet light.

Crystalline aluminium and zirconium oxides are known for their great hardness, being used in the ceramics industry as refractory elements in polishing applications and anti-abrasion materials.

Bismuth oxides are used as disinfectants, in the vulcanizing of rubber, in catalysis processes and also as anti-flame and anti-smoke additives in polymeric materials.

Iron oxides are used as pigments and, thanks to the fact that they have great surface absorption capacity, they are used in water purification and gas absorption processes.

There are numerous publications that disclose the methods of obtainment of metal oxide particles, supported or not on substrates such as clays. These methods include sol-gel processes of hydrolysis and condensation of the metal oxide from the alkoxide or the inorganic salts of the metal in aqueous solution, of alcohols or organic solvents. Precipitation of the metal oxide or hydroxide is achieved by hydrothermal processes, microwave heating, addition of bases or acids or electrodeposition. On occasions, a later thermal treatment is necessary to obtain the metal oxide from the hydroxide, or to obtain the metal oxide in crystalline phase. Optionally, organic stabilizers and surfactants are added to control the size of the particles formed and prevent agglomeration. Application PCT WO2001AU00821 discloses the manufacturing of metal oxide nanoparticles on an exfoliated layered silicate support.

Patent JP19970160630 discloses a material based on metal oxide particles intercalated in clay after the formation of the former by sol-gel route.

Among the different properties that metal oxides may present, the capacity for protection against the action of microorganisms is of the most significant, since it is a basic requirement for many current applications of plastic, such as preserving the quality of packaged food, guaranteeing aseptic conditions in biomedical applications, contributing to limiting the growth of microorganisms on exposed and working surfaces, among other applications. Patent US7306777 discloses the use of germicide materials based on silver nanoparticles applied on containers and packaging. However, to date, no specific design has been published which describes the manufacturing process of nanocomposites with plastic or ceramic base containing nanoclays with metal oxides for applications to protect against the action of microorganisms and/or with antioxidant, selfcleaning and/or oxygen sequestrating properties.

Microorganisms and, specifically, bacteria, are the main cause of diseases caused by contaminated food. They may survive the thermal treatment required for the packaging or contaminate the food after said treatment due to sutures or leaks from the packaging. In addition to their potential danger for health, the proliferation of microorganisms may cause alterations in good which in turn give rise to changes in the physical, chemical and organoleptic properties thereof. Some of the traditional conservation methods such as thermal treatments, irradiation, packaging in modified atmosphere or addition of salts may not be applied to certain types of food such as vegetables, fruit and fresh meats or ready-made foods. On the other hand, the direct application of antibacterial substances to the food has limited effects since they neutralize and quickly disseminate towards the inside of the food. Considering the above aspects, active containers constitute a viable and advantageous form for limiting and controlling bacterial growth in food, since the antimicrobial agents slowly migrate from the material to the product surface. The migration may be as extensive as required, so that the transport and storage time is covered and it even guarantees until consumption. In the case of the antimicrobial nanoadditives disclosed in the present invention, once incorporated in the containers they can control microbial contamination by inactivation of the enzymatic metabolism of the microorganisms. The effect of microorganisms is also undesirable in other sectors. In the field of medicine, it is essential to eliminate the risks of contagion in invasive treatments, of open wounds, as well as in routine treatments. As examples of said treatments, we can cite the coatings with antimicrobial films of catheters and stethoscopes and the production of tissues on fibres pretreated with silver nitrate or with broad spectrum antibiotics for treatments of wounds and burns. In the textile industry, as regards fashion and work wear, for example, the use of fibres pretreated with antibacterial agents limits the proliferation of microorganisms in the presence of sweat, humidity and high temperatures, reducing bad odours and risks of contagion. The accumulation and deposit of biological material on surfaces exposed to diverse ambient conditions, such as vessels, painted objects or systems exposed to high humidity or other surfaces exposed to active, aggressive or environmentally adverse media is known as fouling. In the case of vessels, fuel consumption may increase by 50 % due to the hydrodynamic resistance offered by the accumulation of biological material in the hull. Antimicrobial systems may act as *antifouling or self-cleaning* if they are applied in the form of layers on the vessels' surface, meaning that fuel consumption is optimum, and that the cleaning and maintenance operations are less frequent. In the case of water containers and tanks, when the interior is coated with a film of antimicrobial compounds it significantly reduces the growth of algae and the generation of bad odours, for which reason the water contained is guaranteed for much longer. Coating with films of antimicrobial compounds or manufacturing with them the working surfaces of laboratories (clinical, microbiological, water analysis, food), of businesses handling fresh food (butchers, fishmongers, etc.), of hospital buildings and health centres, to mention just a few examples, guarantees the suitable hygienic conditions for development of the work and eliminates the risk of contamination and infections. Plastic materials with antimicrobial properties can also be used in manufacturing handles, handlebars, handgrips and armrests of public transport elements, in rails and support points in places widely used, in the manufacturing of sanitary ware for public and mass use, as well as in headphones and microphones of telephones and audio systems in public places; kitchen utensils and food transport, all with the purpose of reducing the risk of propagation of infections and diseases. Manufacturing ceramic pieces that inhibit the proliferation of microorganisms on ceramic products is also of emerging interest, for example, the proliferation of fungi and mould on surfaces covered with ceramic floor tiles or their joining points.

In the field of ceramic materials, there are patents that, for example, disclose the production of antibacterial

ceramic products with $Ag_2WO_4$ (silver tungstate) for their use in sanitary ware (CN101062786). The development of antimicrobial ceramics that eliminate or reduce the risk of propagation of infections and contaminations in potentially infectious environments is, therefore, of great interest in ceramic applications (sanitary ware of public toilets, for example), in environments where the control of microbial growth is essential for the good performance of activities (tiles for floors and walls of surgeries, clinical and toxicological laboratories, childcare centres, for example); in formulations for the preparation and/or repair of removable or permanent dental pieces (odontology), among other potential applications.

Other active properties of great interest are the "antioxidant" character which functions by the sequestration of free radicals and which, therefore, prevent oxidation processes even in the presence of oxygen and the "oxygen sequestrating" capacity, which prevent oxidation due to oxygen scavenging.

The catalytic properties of some metal oxides in synthesis or degradation of organic molecules, of oxidation and hydrogenation/dehydrogenation for water formation or the saturation of double bonds in organic molecules, means these materials acquire high added value in the chemical and materials industry. Reducible oxides, such as transition metal oxides, both mass and supported, have been extensively studied for the oxidative dehydrogenation reaction of alkanes, in particular, of ethane and propane.

Metal oxides supported on substrates show totally different catalytic properties to those observed for mass metal oxides. The catalytic behaviour of these metal oxides is drastically enhanced when they are supported on substrates with high surface areas. The catalysis reactions are produced on the surface of the metal oxides, so that a greater available surface achieved from the decrease in size of the oxide particles and/or by a homogeneous and effective dispersion on the support increases the catalytic efficacy of these materials.

Patent CN20091025061 discloses the manufacturing of a catalytic system for the treatment of biomass by ultraviolet light, based on metal oxides and $SiO_2$ (clay).

Patent CN20061089021 discloses a catalyst for the cracking of oil substances based on metals in their maximum state of oxidation supported on alumina or clay.

Patent US20030382742 discloses a metallocene catalyst based on agglomerated metal oxide and clay.

Patent JP20000090198 discloses the manufacturing of a catalyst for the decomposition of harmful substances based on an inorganic material (clay), an alumina-type porous material and a layered catalyst resulting from incorporating a metal oxide in a layered material.

Patent JP19970075108 discloses the obtainment of a photocatalytic absorbing layer composed of a photoreactive semiconductor, a metal oxide, clay as absorber and antimicrobial cellulose.

Among the patents that relate to metal oxides supported on clays for different applications, we have document JP19950205046 which discloses the coating process of a clay with a metal oxide for high-transparency cosmetic applications.

Patent JP19890146790 discloses the obtainment of a ceramic material with magnetic properties based on chromium dross and a clay with metal oxide.

No documents have been found which disclose the manufacturing of nanocomposite materials based on nanoclays as support of metal oxide particles incorporated on the surface, pre- or post-modified so that they are compatible with plastic or ceramic matrices for the manufacturing of materials with passive properties (anti-abrasion, UV block, gas and vapour barrier, mechanical and thermal strengthening, fire resistance) and/or active (antimicrobial, antioxidant, oxygen sequestrating, catalytic, self-cleaning capacity) and which may also be used advantageously in multisector applications including the packaging of food, paints and in general in coatings. The advantages of these nanoadditives when they are incorporated in plastic or ceramic matrices to obtain nanocomposite materials are the obtainment of a great dispersion, providing new functionalities or strengthening the existing one à la carte with minimum impact on processing and/or on the inherently good properties of the matrix, reductions in cost and greater efficacy.

**DESCRIPTION OF THE INVENTION**

Therefore, the present invention relates to novel nanocomposite materials comprising nanoclays (layered phyllosilicates) which support metal oxides for their incorporation in plastic and/or ceramic matrices, with improved gas and vapour, flame retardant, mechanical and thermal properties with respect to the matrix, with the additional capacity of blocking electromagnetic radiation (UV-Vis) and of allowing the fixation and/or the controlled release of active and/or bioactive substances, e.g. antimicrobial and/or antioxidant and/or oxygen sequestrating and/or self-cleaning and/or catalytic and which, in turn, are sufficiently compatibles and thermally stable to allow plastic manufacturing and processing processes and even of firing in ceramics.

In the present invention the functional or active properties are generically conferred or reinforced by the incorporation in clays of oxides of zinc, zirconium, cerium, titanium, magnesium, manganese, palladium, aluminium, iron, copper, molybdenum, chromium, vanadium, cobalt or other metals of groups III to XII of the periodic table and which may optionally contain other organic, inorganic or metal substances, either natural or synthetic with, for example biocide, antioxidant and oxygen sequestrating capacity in the structure of the nanoclays.

The incorporation of active substances based on metal oxides in clays is not only interesting for the manufacturing of nanocomposites based on the addition of such additives to plastics, but, due to the fact that the metal oxides resist the thermal treatments, they can also be used in the ceramics industry for the manufacturing of ceramic and porcelain products with antimicrobial, selfcleaning properties, etc. Some metal oxides, such as titanium dioxide in its anatase crystalline form, have photocatalytic properties for the degradation of the organic matter and, therefore, can be used in applications where one wants to reduce the impact of stains or an organic substance. Some metal oxides such as zinc oxide have antimicrobial activity, and can be used in applications requiring inhibition of microbial growth. Some metal oxides such as cerium oxide (IV) have antioxidant properties and, therefore, they can be used in applications wherein it is necessary to protect a product against oxidation due to the action of free radicals and/or oxygen. Some metal oxides such as zirconium oxide or alumina have exceptional hardness and, therefore, they can be used in applications where resistance to abrasion is required.

The incorporation of these functionalized nanoadditives based on clays and metal oxides in plastics is advantageous thanks to the great dispersion achieved by the functionalized and compatibilized nanoclays in the plastic matrices. Furthermore, the nanoadditives give the plastics additional strengthening in the passive properties, i.e. in the physical properties, and with small additions novel à la carte functionalities are achieved with minimum impact on the inherently good properties of the plastic matrix, such as the optical properties and resilience.

Availability in the ceramics industry of nanoadditives with active or passive properties based on nanoclays makes it possible to increase the efficacy of these products due to the great dispersion shown by the functionalized nanoclays in these matrices.

Excellent results are thus obtained with smaller additions of nanoadditives, and the ceramic products can be formulated more efficaciously, with greater versatility and with multiple functionalities since, in the case of substances with active properties, said substances are supported on clays which are familiar and natural components to the ceramic matrix and, therefore, also lead to an important costs reduction.

These examples also make it possible to define the field of application of the novel nanocomposite materials with active properties based on metal oxides and natural or synthetic substances, the obtainment processes whereof are detailed in the present patent.

Therefore, a first aspect of the present invention relates to nanoclays comprising metal oxides intercalated in their structure.

In the present invention, nanoclays are understood as those layered structures of clay, of micrometric size which are dispersed in nanometric size (under 100 nm) typically only in the dimension of the thickness when they are incorporated in plastic or ceramic matrices.

In a preferred embodiment, the nanoclays of the present invention are selected from the group formed by layered silicates and/or layered double hydroxides. More preferably, the nanoclays are selected from the group formed by: clays of montmorillonite, kaolinite, bentonite, smectite, hectorite, sepiolite, gibbsite, dickite, nacrite, saponite, halloysite, vermiculite, mica type, and/or mixtures thereof or with other phyllosilicates, mainly, with or without previous organic and/or inorganic surface modification.

Another aspect of the present invention relates to the metals forming the oxides, which are selected from groups III to XII of the periodic table, furthermore and, without limitation, from magnesium, calcium, aluminium and cerium.

Furthermore, another aspect of the present invention relates to nanoclays comprising metal oxides intercalated in their structure which, in turn, the nanoclays comprise additives (modifiers) that are incorporated in the structure thereof causing a surface modification:

When the surface modification is applied, it further enables introducing or accentuating the active activity due to incorporation of compatibilizing agents with active properties, increasing the compatibility between the nanoclay and a plastic or polymeric or ceramic matrix, to achieve a better exfoliation of the clay. It thus achieves a good morphology for improving the dispersion and surface exposure of the active substances, which are substances based on metal oxides and/or combinations thereof.

Preferably, the additives that are incorporated in the structure of the nanoclays, causing a surface modification, are selected from the group formed by:

a) expander precursors;
b) compatibilizing agents;
c) functionalizing substances; or
d) any combination thereof.

a) The expander-type precursors are selected from the group formed by: dimethyl sulfoxide (DMSO), ethylene polyoxide, metal salts, N-methyl formamide (NMF), alcohols, acetates, hydrated hydrazine, water, anhydrous hydrazine, carboxymethyl starch, acetamide, starch, DMSO + methanol (MeOH), hydroxyethyl starch, hexanoic acid, hydroxypropyl starch, acrylamides, adonitol, glucose, archylamide, salicylic acid, caprolactam, glycolic acid, tannic acid, maleic acid, maleic anhydride, lactic acid, adipic acid, acetic acid, acetaldehyde, sorbitan, butyric acid, tetrafluoroethylene, chlorotrifluoroethylene, vinyl pyrrolidone, hexamethylene, vinyl versatate or any combination thereof.

Preferably, the expander-type precursors are selected from the group formed by DMSO, alcohols, acetates, or water or mixture thereof, and metal salts, selected from the group formed by silver, copper, iron, titanium, cerium, zinc, nickel, calcium, manganese or cobalt.

More preferably, the metal salts are selected from the group formed by: silver nitrate, silver acetate, nickel chloride, cobalt chloride, copper nitrate, copper sulfate, calcium butyrate or manganese butyrate.

More preferably, the acetates are selected from the group formed by: cellulose acetate butyrate, sucrose acetate isobutyrate, manganese acetate, vinyl acetate or potassium acetate.

More preferably, the alcohols are selected from the group formed by: sorbitol, dibenzylidene sorbitol, ethylene glycol, polypropylene glycol, propylene glycol, isopropanol, methanol, ethanol, triethylene glycol, tetraethylene glycol, glycerol,1,2-propanediol,1,3-propanediol, polyethylene glycol $M_w$ = 1000, polyethylene glycol $M_w$ = 3400, pipropylene glycol or piethylene glycol.

b) The compatibilizing agents are selected from the group formed by metal, inorganic, organic or hybrid substances. More preferably, they are selected from the group formed by:

- PVOH, EVOH and derivatives of the same family,
- biopolymers,
- bioactive materials of biomedical use,
- phosphates of organic salts and phosphonium salts such as phosphine salts,
- natural or synthetic antioxidants,
- quaternary ammonium salts,
- polyethylene glycol esters with monocarboxylic aliphatic acids (C6-C22) and their ammonium and sodium sulphates,
- perfluorooctanoic acid and its ammonium salt,
- chitosan and its derivatives,
- metal salts,
- other particles or nanoparticles with antimicrobial, antioxidant or oxygen sequestrating properties such as micro and nanoparticles of metal compounds,
- and/or any combination of all the above.

The biopolymers may comprise plasticizers, crosslinking agents, emulsifiers and/or surfactants and are selected from the group formed by peptides and proteins, polysaccharides and polypeptides, lipids, nucleic acids and polymers of nucleic acids and biodegradable polyesters and polyhydroxyalkanoates.

In the present invention the proteins, polysaccharides, polypeptides and polymers of nucleic acids may be natural or synthetic, the latter being synthesized chemically or by genetic modification of microorganisms or plants.

Preferably, the natural or synthetic polysaccharides are selected from the group, and without limitation, formed by cellulose and derivatives, carrageenans and derivatives, alginates, chitin, glycogen, dextran, gum arabic and preferably chitosan or any of its derivatives, both natural and synthetic, more preferably the chitosan salts and even more preferably chitosan acetate.

Preferably, the proteins are selected, without limitation, from corn proteins (zein), elastin, gluten derivatives, such as gluten or its gliadin and glutenin fractions, gelatine, casein, agar-agar, collagen and soy proteins and derivatives thereof.

Preferably, the biodegradable polyesters are selected from the group formed by polylactic acid, polyhydroxyalkanoates, polyglycolic acid, polylactic-glycolic, polycaprolactone, adipic acid and derivatives.

Preferably the lipids are selected from the group formed by: elastin, beeswax, carnauba wax, candelilla wax, shellac and fatty acids and monoglycerides and/or mixtures of all the above.

On the other hand, the polyhydroxyalkanoates, are of polyhydroxybutyrate and its copolymers with valerate.

* The biomedical materials of the present invention are of the hydroxyapatite type.

* The natural or synthetic antioxidants are selected from polyphenols, such as resveratrol or flavonoids, plant extracts such as, but without limitation, eugenol or rosemary extracts and vitamins, preferably tocopherols and tocotrienols or ascorbic acid/vitamin C.

\* The quaternary ammonium salts of the present invention are, Preferably, and without limitation, those which are permitted for food contact (i.e. which are included in the lists of monomers and other starting substances authorized by legislation to be used in the manufacturing of plastic objects and materials) such as hexadecyltrimethylammonium bromide, N-methacryloyloxyethyl-N,N-dimethyl-N-carboxymethylammonium chloride and bis(2-hydroxyethyl)-2-hydroxypropyl-3-(dodecyloxy) methylammonium chloride and others such as mono- and di-alkyl ammonium chlorides and more preferably di(hydrogenated tallow)dimethylammonium chloride.

\* In the present invention the metal salts added as additives to the nanoclays are metal salts such as those of silver, iron, copper, titanium, zinc, cerium, zirconium, palladium, manganese, magnesium or nickel.

c) The functionalizing substances have catalytic, active or bioactive character in order that they are intercalated and are fixed or released in controlled manner giving rise to compounds with active or bioactive capacity. The functionalizing substances are selected from the group formed by:

- ethanol, or ethylene,
- essential oils (preferably thymol, carvacrol, carvone, cinnamaldehyde, cinnamon derivatives, allyl isocyanate, linalool and mixtures),
- reduced-size antimicrobial peptides (preferably bacteriocins), natural or obtained by genetic modification (preferably nisins, enterocins, lacticins and lysozyme),
- natural or synthetic antioxidants (preferably polyphenols, such as, but without limitation, resveratrol or flavonoids, plant extracts such as, but without limitation, eugenol or rosemary extracts and vitamins, preferably tocopherols and tocotrienols or ascorbic acid/vitamin C),
- substances with bioactive, therapeutic or pharmacological capacity such as drugs which require controlled release, enzymes, bioavailable calcium compounds, marine oils (omega 3 and 6), probiotics (lactic bacteria), prebiotics (non-digestible fibre) and symbiotics.
- hexadecyltrimethylammonium bromide,
- organic and inorganic metal salts and/or oxides and/or metal particles (preferably of silver, copper, cerium, zinc, magnesium, tin, manganese, palladium, iron, titanium, zirconium, nickel or cobalt) or any combination of the above.

These elements may be fixed and/or later released towards the product in controlled manner (control of the matrix) and exercise their catalytic, active or bioactive role, and/or they can be released from the matrix and that the nanoclays control the kinetics (control of the nanoadditive).

The proportion of metal compounds (in percentage form of the metal element) in the nanoclay is less than 99.9 %, more preferably less than 70 % and is even more preferably less than 50 %.

A second aspect of the present invention relates to nanocomposite materials comprising the nanoclays as defined above and a plastic or polymeric-type matrix or a ceramic-type matrix.

A) In this same sense the plastic or polymeric matrices are selected from the group formed by the following matrices:

- thermoplastic,
- thermostable,
- elastomeric,
- biopolymer.

Preferably, the thermoplastic, thermostable and elastomeric matrices are selected from the following list: polyolefins, polyesters, polyamides, polyimides, polyketones, polyisocyanates, polysulfones, styrenic plastics, phenol resins, amide resins, ureic resins, melamine resins, polyester resins, epoxy resins, polycarbonates, polyvinyl pyrrolidones, epoxy resins, polyacrylates, rubbers and gums, polyurethanes, silicones, aramides, polybutadiene, polyisoprenes, polyacrylonitriles, PVDF (polyvinylidene fluoride), PVA (polyvinyl acetate), PVOH (polyvinyl alcohol), EVOH (ethylene vinyl alcohol copolymer), PVC (polyvinyl chloride) or PVDC (polyvinylidene chloride).

Preferably, the biopolymers are selected from the group formed by proteins, polysaccharides, lipids and biopolyesters or any combination thereof.

According to another preferred embodiment, the plastic matrix is in a weight proportion with respect to the total of the nanocomposite material, of 5 % to 99.99 %, both values inclusive. Preferably, they are in a proportion of 20 % to 99.99 %, both values inclusive, and even more preferably of 90 % to 99.99 %.

B) Furthermore, the ceramic matrices comprise:

i)

- water,
- clays (preferably kaolinites and occasionally montmorillonites),
- deflocculants,
- feldspars,
- feldspar sands,
  which may optionally comprise
- kaolin,
- carbonates and
- zirconium.
  or

ii)

- kaolin or a kaolinite(5 %) or montmorillonite (1 %) clay,
- feldspars,
- frits:
- silica and
- silica sands.

In the present invention frits are understood as a mixture of inorganic chemical substances obtained by fast cooling of a melt, which is a complex combination of materials, turning the chemical substances thus produced into insoluble vitreous compounds which are in the form of flakes or granules.

This type of ceramic matrix with these elements is called an enamel-type ceramic matrix.

According to another preferred embodiment, the ceramic matrix is in a weight proportion with respect to the total of the material of 5 % to 99.99 %. Preferably, of 20 % to 99.99 %, and even more preferably of 65 % to 99.99 %.

The nanoclays are characterized in that they are introduced as fillers of layered type with sizes in the range of nanometres in at least the thickness of the particle, in plastic or polymeric matrices and/or in ceramic matrices to form the new materials.

According to a preferred embodiment, in plastic matrices, the nanoclays are in a proportion from 0.01 % to 95 % with respect to the total of the nanocomposite material, preferably from 0.01 % to 80 % and more preferably from 0.01 % to 40 %.

In the finished ceramic matrices, the nanoclays are in a weight proportion from 0.01 % to 95 % with respect to the total of the nanocomposite material, preferably from 0.01 % to 80 % and more preferably from 0.01 % to 35 %.

In the ceramic matrices of enamel type, the nanoclays are in a weight proportion from 0.01 % to 50 % with respect to the total of the nanocomposite material, preferably from 0.01 % to 20 % and more preferably from 0.01 % to 15 %.

Another aspect of the present invention relates to the matrices of the nanocomposite material which further comprise additives with properties of electromagnetic radiation barrier and fire resistance and other substances with passive, active or bioactive properties additional to the nanoclays, selected from the group formed by:

- metals,
- metal salts,
- metal oxides with:

  - antimicrobial properties such as zinc oxide,
  - oxygen sequestrators such as cerium dioxide,
  - photocatalytic properties such as titanium dioxide,
  - anti-abrasive properties such as zirconium dioxide;

- low molecular weight substances with active or bioactive character selected from ethanol, or ethylene, or of essential-oil type (preferably thymol, carvacrol, cinnamon derivatives, allyl isocyanate, linalool or any combination thereof), or reduced-size antimicrobial peptides (preferably bacteriocins), natural or obtained by genetic modification (preferably nisins, enterocins, lacticins and lysozyme),
- quaternary ammonium salts. Preferably, and without limitation, those which are permitted for food contact (i.e. which are included in the lists of monomers and other starting substances authorized by legislation to be used in the manufacturing of plastic objects and materials) such as hexadecyltrimethylammonium bromide, N-methacryloyloxyethyl-N,N-dimethyl-N-carboxymethylammonium chloride and bis(2-hydroxyethyl)-2-hydroxypropyl-3-(dodecyloxy) methylammonium chloride and others such as mono- and di-alkyl ammonium chlorides and more preferably di(hydrogenated tallow)dimethylammonium chloride,

- natural or synthetic antioxidants (preferably polyphenols such as, but without limitation, resveratrol or flavonoids, plant extracts such as, but without limitation, eugenol or rosemary extracts and vitamins, preferably tocopherols and tocotrienols or ascorbic acid/vitamin C),
- substances with bioactive, therapeutic or pharmacological capacity such as drugs which require controlled release, enzymes, bioavailable calcium compounds, marine oils (omega 3 and 6), probiotics (lactic bacteria), prebiotics (non-digestible fibre) and symbiotics; or - any combination of all the above.

In the present invention, the metals present as additives, whether in the salts, in the oxides or metals per se, are selected from groups III to XII of the periodic table, furthermore and, without limitation, from magnesium, calcium, aluminium and cerium.

In this way, the salts present as additives are selected, without limitation, from the group formed by nitrates, sulfates, phosphates, acetates, chlorides, bromides.

A third aspect of the present invention relates to a polymeric or ceramic article comprising the material described above.

A fourth aspect of the present invention relates to the use of the nanoclays for the manufacturing of nanocomposite materials.

A fifth aspect of the present invention relates to the use of the nanocomposite materials comprising the nanoclays and the polymeric or ceramic matrices for the manufacturing of polymeric or ceramic articles.

A sixth aspect of the present invention relates to the use of the polymeric or ceramic articles in the pharmaceutical, food, automotive, electronics and construction sectors and in all sectors that require the properties of the materials presented herein, such as containers, plastic coatings, paints, plastic parts and accessories, ceramic surfaces, coatings, enamels, worksurfaces, floor tiles and porcelain sanitary and kitchen ware, among others.

A seventh aspect of the present invention relates to a synthesis process of the nanoclays comprising intercalated metal oxides comprising the following stages:

a) Decrease in the size of natural clays by mechanical action for example by means of milling technologies. This process is carried out until obtaining a particle size under 30 microns in D90.

b) Classification in vibrating screen, centrifuge, filter press or any other dry or wet filtration system until a range between 0.1 and 100 microns, preferably a decrease in the particle size is achieved of under 25 microns and more preferably under 7 microns in D90 (no more than 10 % of the material is above that value).

After stage b) the following optional stages can be carried out:

i) elimination of the organic matter by decanting techniques, collection of supernatant or by chemical reaction with oxidizing substances such as peroxides.

ii) finer elimination of the crystalline oxides and hard particles not subject to modification, either by means of centrifugation and/or gravimentric processes in solution or by turbo-dryers, preferably by a wet or dry centrifugation process followed or not by an atomization process with controlled depression or by any other industrial drying process including lyophilization.

c) Obtainment of layered fines either in liquid suspension or in powder via later drying by a wet or dry centrifugation process followed or not by an atomization process with controlled depression or by any other industrial drying process including lyophilization.

d) Addition to the layered structures in at least one step, of expander-type precursors (table 1). Said expanders are the same as described above.

Table 1 expanders and distance between layers of some types of clay, generated after addition of the expander:

| Expander | $d_{expander}$ (nm) | Expander | $d_{expander}$ (nm) |
|---|---|---|---|
| *Unmodified kaolinite* | 0.72 | *Unmodified montmorillonite* | 0.98 |
| *Dimethyl sulfoxide (DMSO)* | 1.11 | *Ethylene polyoxide* | 1.12 |
| *Silver nitrate* | *0.74* | *Silver nitrate* | *0.99* |
| *Silver acetate* | *0.74* | *Silver acetate* | *0.99* |
| *Nickel chloride* | 0.75 | *Nickel chloride* | *0.99* |
| *Cobalt chloride* | 0.76 | *Cobalt chloride* | *0.99* |

(continued)

| Expander | $d_{expander}$ (nm) | Expander | $d_{expander}$ (nm) |
|---|---|---|---|
| Copper nitrate | 0.76 | Copper nitrate | 1.00 |
| N-methyl formamide (NMF) | 1.02 | Cellulose acetate butyrate | 1.13 |
| Hydrated hydrazine | 1.03 | Calcium butyrate | 0.92 |
| Water | 0.78 | Sucrose acetate isobutyrate | 1.08 |
| Alcohols | 1.10 | Manganese butyrate | 0.95 |
| Anhydrous hydrazine | 0.96 | Carboxymethyl starch | >3 |
| Acetamide | 1.09 | Starch | 1.21 |
| DMSO + Methanol(MeOH) | 1.12 | Hydroxyethyl starch | 1.15 |
| Hexanoic acid | 1.23 | Hydroxypropyl starch | 1.14 |
| Acrylamides | 1.44 | Adonitol | 1.04 |
| Glucose | 1.25 | Sorbitol | 1.19 |
| Archylamide | 1.14 | Dibenzylidene sorbitol | 1.16 |
| Salicylic acid | 1.07 | Ethylene glycol | 0.95 |
| Manganese acetate | 1.41 | Polypropylene glycol | 1.01 |
| Caprolactam | 1.18 | Propylene glycol | 1.01 |
| Vinyl acetate | 1.21 | Glycolic acid | 1.06 |
| Potassium acetate | 1.39 | Triethylene glycol | 1.08 |
| Tannic acid | 1.09 | Tetraethylene glycol | 1.06 |
| Maleic acid | 1.20 | Glycerol | 1.02 |
| Maleic anhydride | 1.20 | 1, 2-Propanediol | 1.09 |
| Lactic acid | 1.08 | 1,3-Propanediol | 0.98 |
| Adipic acid | 1.03 | Polyethylene glycol $M_w$ = 1000 | 1.11 |
| Acetic acid | 1.10 | Polyethylene glycol $M_w$ = 3400 | 1.12 |
| Acetaldehyde | 0.91 | Sorbitan | 1.09 |
| Butyric acid | 1.01 | Dipropylene glycol | 1.03 |
| Tetrafluoroethylene | 0.98 | Diethylene glycol | 1.04 |
| Chlorotrifluoroethylene | 1.05 | Vinyl pyrrolidone | 1.23 |
| Hexamethylene | 1.02 | Vinyl versatate | 1.11 |

The expanders of the group formed by DMSO, alcohols, acetates, or water or mixture thereof, and metal salts of silver, copper, iron, titanium, cerium, zinc, nickel or cobalt, which activate the fines by an initial increase in the basal spacing of the layers and modify the surface characteristics of the clay and/or mixture of the above.

The penetration of the precursors will be accelerated, without limitation, by

- temperature increase,
- turbulent regime homogenization,
- ultrasounds,
- application of supercritical fluids,
- deflocculating agents such as acrylates and/or phosphates,
- generation of pressure above atmospheric,
- mixture of the above.

Optionally, a stage iii) of drying of the expanders can be carried out, after washing or not with water or alcohols. Their drying can be performed by evaporation in oven, lyophilisation, centrifugation and/or gravimentric processes in solution or turbo-dryers or by atomization.

e) Addition of precursors of the oxides to be intercalated in the nanoclays. Said precursors are selected from the group formed by metal alkoxides or organic and/or inorganic salts of metals such as silver, copper, iron, cerium, cobalt, tin, manganese, magnesium, palladium, titanium, nickel, zirconium, zinc or other metals, more preferably the metals are cerium, palladium, titanium, tin, magnesium, zinc and zirconium.

f) Oxide formulation by total or partial application of a physical or chemical treatment. In this way, the oxide or hydroxide particles are obtained from the metal precursor supported on the nanoclays. The formulation is carried out, without limitation, by sol-gel processes, chemical precipitation or hydrolysis by the addition of acids, bases, oxidizing substances, reduction and subsequent total or partial oxidation, or solvents, hydrothermal precipitation, electrodeposition, annealing at high temperatures (100 - 1200 °C), UV radiation, infrared radiation and/or microwave radiation. On concluding any of these treatments the degree of oxidation of the metal centre shall be modified, totally or partially, forming the metal oxide, giving the material active or passive properties.

Optionally, after stage f) of oxide formulation, a stage iv) is carried out of addition of functionalizing substances with active, bioactive or catalytic character of the activity of the metal oxides in order that they are intercalated and are fixed or controlled manner giving rise to compounds with active, bioactive or catalytic capacity strengthening the active effect. The active substances will be ethanol, or ethylene, or of essential-oil type (preferably thymol, carvacrol, linalool and mixtures), or reduced-size antimicrobial peptides (preferably bacteriocins), natural or obtained by genetic modification (preferably nisins, enterocins, lacticins and lysozyme), or natural or synthetic antioxidants (preferably polyphenols, such as, but without limitation, resveratrol or flavonoids, plant extracts such as, but without limitation, eugenol or rosemary extracts and vitamins, preferably tocopherols and tocotrienols or ascorbic acid/vitamin C) or drugs, or enzymes or bioavailable calcium compounds, marine oils, probiotics, symbiotics or prebiotics (non-digestible fibre), or ammonium salts preferably mono- and di-alkyl ammonium chlorides and more preferably di(hydrogenated tallow)dimethylammonium chloride and hexadecyltrimethylammonium bromide or organic and inorganic metal salts (preferably of silver, copper, cerium, zinc, palladium, manganese, magnesium, tin, iron, titanium, nickel or cobalt) or mixture of the above). It is expected that these elements can be fixed and/or later released to the product in controlled manner (control of the matrix) and exercise their active or bioactive role. The contents to be contained are added in general less than 80 % by volume of the solution, preferably less than 50 % and more preferably less than 20 %. The penetration of these substances will be accelerated, and without limitation, by the use of temperature, a turbulent regime homogenizer, ultrasounds, pressure or a mixture thereof. In the case of the incorporation of metal salts they can be totally or partially reduced to their metal state using, without limitation, chemical methods (use of reducing agents, without limitation, sodium borohydride, ethanol, sodium sulfite and bisulfite, ascorbic acid), by application of heat or UV-Vis radiation. Also, in the case of metal salts, the metal oxide can be partially or totally obtained using the methods mentioned above.

Also, subsequent to stages d) or f) or iv), it is possible to perform an optional stage v) of intercalation in aqueous base or with polar solvents, of compatibilizing or intercalating agents selected from metal, inorganic, organic or hybrid substances in the layered structure. In this same sense, the compounds to be intercalated are selected, and without limitation, from the group formed by PVOH, EVOH and derivatives of the same family, and/or biopolymers such as peptides and proteins, natural or synthetic, chemically or genetic modification of microorganisms or plants and natural or synthetic polysaccharides chemically or genetic modification of microorganisms or plants and polypeptides, lipids, nucleic acids and polymers of synthetic nucleic acids obtained chemically or by genetic modification of microorganisms or plants, and biodegradable polyesters such as polylactic acid, polylactic-glycolic, polycaprolactone, adipic acid and derivatives and polyhydroxyalkanoates, preferably polyhydroxybutyrate and its copolymers with valerates, biomedical materials such as hydroxyapatites and phosphates of organic salts, and or natural or synthetic antioxidants (preferably polyphenols, such as, but without limitation, resveratrol or flavonoids, plant extracts such as, but without limitation, eugenol or rosemary extracts and vitamins, preferably tocopherols and tocotrienols or ascorbic acid/vitamin C). It is also possible to intercalate quaternary ammonium salts such as mono- and di-alkyl ammonium chlorides and more preferably di(hydrogenated tallow)dimethylammonium chloride although preferably salts are used that are permitted for food contact (i.e. which are included in the lists of monomers and other starting substances authorized by legislation to be used in the manufacturing of plastic objects and materials) such as, and without limitation, hexadecyltrimethylammonium bromide, polyethylene glycol esters with monocarboxylic aliphatic acids (C6-C22) and their ammonium and sodium sulphates, perfluorooctanoic acid and its ammonium salt, N-methacryloyloxyethyl-N,N-dimethyl-N-carboxymethylammonium chloride copolymers, bis(2-hydroxyethyl)-2-hydroxypropyl-3-(dodecyloxy) methylammonium chloride; and chitosan and its derivatives, and metal salts, without limitation, of silver, iron, copper, manganese, magnesium, titanium, zinc, cerium, tin, zirconium, nickel and other particles or nanoparticles with antimicrobial properties, antioxidant or oxygen sequestrating and/or combinations of all the above.

When the organic matter which is intercalated is EVOH or any material of the family thereof with molar contents of ethylene preferably less than 48 %, and more preferably less than 29 %, they are taken to saturation in aqueous medium or in specific solvents of alcoholic type and mixtures of alcohols and water, more preferably of water and isopropanol in volume proportions of water greater than 50 %.

On the other hand, the biopolymers with or without plasticizers, with or without crosslinking agents and with or without emulsifiers or surfactants or another type of nanoadditives, are of the group formed by synthetic and natural polysaccharides (plant or animal) such as cellulose and derivatives, carrageenans and derivatives, alginates, dextran, gum arabic and preferably chitosan or any of its derivatives, both natural and synthetic, more preferably chitosan salts and even more preferably chitosan acetate, and proteins both derived from plants and animals and corn proteins (zein), gluten derivatives, such as gluten or its gliadin and glutenin fractions and more preferably gelatine, casein and the soy proteins and derivatives thereof, as well as natural or synthetic polypeptides preferably of the elastin-type obtained chemically or by genetic modification of microorganisms or plants, lipids such as beeswax, carnauba wax, candelilla wax, shellac and fatty acids and monoglycerides and/or mixtures of all the above.

In the case of chitosan the degree of deacetylation will preferably be over 80 % and more preferably over 87 %. The penetration of the precursors will be accelerated by the use of temperature, a turbulent regime homogenizer, ultrasounds, pressure or mixture of the above.

Also optionally, in any of the previous stages which involve wet processes, deflocculating agents are added to facilitate processing, such as, and without limitation, polyphosphates and/or acrylates.

An eighth aspect of the present invention relates to a process for the manufacturing of the aforementioned nanocomposite materials, comprising the addition of the nanoclays in solid or liquid state comprising oxides intercalated in a plastic or polymeric matrix or in a ceramic matrix.

Subsequently, optionally in a stage vii), active organic and inorganic metal salts (preferably of silver, iron, copper, titanium, zinc, manganese, cerium, palladium, magnesium, tin, nickel or cobalt) and/or any other type of active and bioactive substances without limitation of the aforementioned are added to the matrix containing the active nanoclays with the intercalated metal oxides, with the object of strengthening or complementing the catalytic, active or bioactive effect of the nanocomposite. Said active substances may be natural or synthetic antioxidant substances such as those described above.

These antioxidant substances can be processed by any plastic processing method to obtain a concentrate or obtain pellets that can be processed by any plastic processing method to obtain plastic articles.

Finally, when the nanocomposite material is strengthened with nanoclays containing metal salts such as zinc, silver, titanium, cerium, tin, magnesium, manganese, zirconium, palladium, iron, molybdenum, cobalt or other metals with active or passive properties, it is possible to apply, whether previously performed or not, a physical or chemical treatment to change the state of oxidation, totally or partially, of the metal centre intercalated in the plastic or ceramic matrix either before, during or after forming. These treatments include, without limitation: annealing at high temperatures (100-1200 °C), UV radiation, infrared radiation, microwave radiation and/or chemical treatment with acids, bases, oxidizing agents, reduction followed by total or partial oxidation, reducers or solvents. On concluding any of these treatments, the degree of oxidation of the metal centre will have been partially modified forming the metal oxide and in those cases it requires, additionally the metal in its native state, giving the nanocomposite advantageous active and/or passive properties.

A ninth aspect of the present invention relates to a process for the manufacturing of a polymeric article comprising the addition of the aforementioned nanoclays during any of the processing stages of a polymeric or plastic matrix or of a ceramic matrix.

Preferably processing of the polymeric or plastic matrix is carried out by any manufacturing method related to the plastics processing industry such as extrusion, application and curing processes typically used to manufacture and form thermostable materials and elastomers, injection, blowing, compression moulding, resin transfer moulding, calendering, thermal shock, internal ultrasonic mixing, coextrusion, co-injection and any combination thereof.

Preferably, the polymeric or plastic matrix is selected from the group formed by the materials and optionally additives described above that improve the properties of electromagnetic radiation barrier and fire resistance and which are typically added to plastics for improving their processing or their properties.

Optionally, it is possible to perform precipitation of the following:

- set of nanoclays and modifiers by evaporation, to obtain a powder of the nanoadditive.
- the plastic or polymeric matrix in dissolution comprising the nanoclays with or without the modifiers, by drying methods such as heating and/or centrifugation and/or gravimetric processes in solution or turbo-dryers and/or atomization; by cooling or by addition of a precipitating agent, to obtain a masterbatch or concentrate of the nanoadditive in a plastic matrix.

In the case of the ceramic matrix, the organic and/or inorganic metal salts with active or passive properties can be added together with other catalytic, active or bioactive substances in any of the stages of manufacturing or processing of ceramic materials, although they will preferably be added during modification of the powders before atomization.

The concentrates of additive in polymeric matrix can be treated as follows:

a) it is ground to give a particulated product by grinding.
b) it is processed by any plastic processing method to give pellets in solid state.
c) it is processed by any manufacturing process related to the plastics processing industry such as extrusion, injection, blowing, compression moulding, resin transfer moulding, calendering, thermal shock, internal mixing, ultrasounds, coextrusion, co-injection and mixture thereof.
d) it is used as additive on any plastic matrix (including said biopolymers and biomedical materials) in a conventional processing route such as those mentioned above.

In the present invention it is understood that compounds with catalytic capacity relates to the fact that they facilitate or increase the effect provided by metal oxides with active properties.

All these characteristics or advantages, as well as others of the invention, can be better understood with the following examples. Furthermore, the examples shown below are not limiting but illustrative so that the present invention can be better understood.

## DESCRIPTION OF THE FIGURES

Fig. 1: corresponds to the X-ray diffractogram (WAXS) obtained from a sample of montmorillonite-type clay modified with titanium oxide and silver nitrate (temperature-resistant antimicrobial) and its later calcination by the method described in Example 1, and a sample of the same type of clay without modifying with titanium oxide and without modifying with silver nitrate.

Fig. 2: shows that the montmorillonite-type clays modified with titanium oxide and silver nitrate show photolytic capacity and degrade the organic matter, in this case the coffee stain 8 days after being irradiated with UV.

Fig. 3: shows that the montmorillonite and kaolinite-type clays modified with titanium oxide and silver nitrate show photolytic capacity and degrade the organic matter, in this case the coffee stain 8 days after being irradiated with UV.

Fig. 4: shows the PVA and LDPE (low density polyethylene) films and their nanocomposites with the montmorillonite-type clays modified with (1 % or 5 %) of silver nitrate, and in the first case also with 20 % surfactant.

Fig. 5: shows the images of the control ceramic coating without clays in accordance with the UV irradiation time. As well as the coating with the titanium oxide in the pure anatase phase and the coatings with the clays modified with the titanium oxide and silver in accordance with the irradiation time.

Fig. 6: shows the X-ray diffractogram of the kaolinite-type clays prepared according to the process described in Example 5.

Fig. 7: shows the X-ray diffractogram of the montmorillonite-type clays prepared according to the process described in Example 5.

Fig. 8: shows the images of the control samples (pure anatase and unmodified montmorillonite clay) in accordance with the UV irradiation time, as well as the clay with the titanium oxide and cerium nitrate.

Fig. 9: shows the X-ray diffractogram of montmorillonite-type clay modified with $SnO_2$ and $TiO_2$ prepared according to the process described in Example 6.

Fig. 10: shows the images of the control samples (pure anatase and unmodified clay) in accordance with the UV irradiation time. As well as the images of the clay with $SnO_2$ and $TiO_2$.

Fig. 11: X-ray diffractogram of kaolinite-type clay modified with ZnO prepared according to the process described in Example 8.

Fig. 12: corresponds to the X-ray diffractogram (WAXS (Wide Angle X-ray Scattering)) a sample of unmodified montmorillonite-type clay and the same clay modified with cerium nitrate, using ammonium hydroxide as oxidizing agent by the method described in Example 9, to obtain cerium oxide/montmorillonite ($CeO_2$-MMT).

Fig. 13: is an image obtained by transmission electron microscope (TEM) showing the main morphologies that can be observed in the nanofillers obtained in Example 9. The image corresponds to an aggregate of montmorillonite-type clay layers modified with cerium nitrate, using ammonium hydroxide as oxidizing agent, to obtain cerium oxide/montmorillonite ($CeO_2$-MMT) by the method described in Example 9.

Fig. 14: is an EDAX (Energy Dispersive Spectroscopy) image showing the appearance and morphology of the montmorillonite-type clay modified with cerium nitrate, using ammonium hydroxide as oxidizing agent, to obtain cerium oxide/montmorillonite ($CeO_2$-MMT) by the method described in Example 9.

Fig. 15: corresponds to the X-ray diffractogram (WAXS) obtained from a sample of montmorillonite-type clay modified with cerium nitrate and reduced with ascorbic acid, to obtain metallic cerium/montmorillonite (Ce°-MMT), by the method described in Example 10, and a sample of the same type of unmodified clay.

Fig. 16: is an image obtained by transmission electron microscope (TEM) showing the main and typical morphologies that may observed in the nanofillers obtained according to the present invention. The image corresponds to an aggregate of montmorillonite-type clay layers modified with cerium nitrate and reduced with ascorbic acid, to obtain metallic cerium/montmorillonite (Ce°-MMT), by the method described in Example 10.

Fig. 17: is an EDAX image showing in appearance and morphology of the montmorillonite-type clay modified with cerium nitrate, using ascorbic acid as reducing agent, to obtain metallic cerium/montmorillonite (Ce°-MMT), by the method described in Example 10.

Fig. 18: corresponds to the X-ray diffractogram (WAXS) obtained from a sample of montmorillonite-type clay with cerium (IV) ammonium nitrate, subsequently oxidized with ammonium hydroxide and calcined, to obtain cerium oxide/montmorillonite ($CeO_2$-MMT) by the method described in Example 11, and a sample of the same type of unmodified clay.

Fig. 19: corresponds to the X-ray diffractogram (WAXS) of a sample of unmodified montmorillonite-type clay and the same clay modified with cerium nitrate, using sodium bisulfite as reducing agent by the method described in Example 12, to obtain metallic cerium/montmorillonite (Ce°-MMT).

Fig. 20: corresponds to the X-ray diffractogram (WAXS) of a sample of unmodified montmorillonite-type clay, of the same clay modified with hexadecyltrimethylammonium bromide (CTABCTAB), and of the same clay modified with hexadecyltrimethylammonium bromide (CTABCTAB) and with ammonium nitrate and cerium (IV), using sodium borohydride as reducer, by the method described in Example 13, to obtain montmorillonite organomodified with CTABCTAB and metallic cerium (Ce°-20 %CTABCTAB-MMT).

Fig. 21: corresponds to the X-ray diffractogram (WAXS) of a sample of unmodified montmorillonite-type clay and the same clay modified with cerium nitrate, using sodium borohydride as reducing agent by the method described in Example 14, to obtain metallic cerium/montmorillonite (Ce°-MMT).

Fig. 22: corresponds to the X-ray diffractogram (WAXS) of a sample of unmodified montmorillonite-type clay and the same clay modified with cerium nitrate and iron chloride, using ascorbic acid as reducing agent by the method described in Example 15, to obtain iron (II) and metallic cerium/montmorillonite (Ce°-Fe(II)-MMT).

Fig. 23: corresponds to the X-ray diffractogram (WAXS) of a sample of unmodified montmorillonite-type clay and the same clay modified with cerium chloride and zirconium oxynitrate, using ammonium hydroxide and high temperature as oxidizing agents, according to the method described in Example 16, to obtain cerium oxide and zirconium oxide/montmorillonite ($CeO_2/ZrO_2$-MMT).

Fig. 24: corresponds to the graphic of contact oxidation inhibition (DPPH method) due to the action of cerium clays whose preparation is described in Examples 9 to 16.

Fig. 25: corresponds to the graphic of oxygen sequestrating capacity in head space of the cerium clays, the preparation whereof is described in Examples 9 to 17.

Fig. 26: corresponds to the graphic of contact oxygen inhibition (DPPH method) by action the HDPE and PET composite films with cerium clays, the preparation whereof is described in Examples 17 and 18.

Fig. 27: corresponds to the graphic of oxygen sequestrating capacity in headspace of HDPE and PET composite films with cerium clays, the preparation whereof is described in Examples 17 and 18.

## EXAMPLES

## DETAILED EXPLANATION OF EMBODIMENTS

Below, the invention will be illustrated by means of tests carried out by the inventors.

## EXAMPLES

Example 1: Synthesis and intercalation of titanium oxide in montmorillonite-type clays modified with 5 % by mass of silver nitrate and its later calcination at 500 °C for 1 h obtaining the anatase phase of $TiO_2$.

Initially, the clay already modified with 5 % $AgNO_3$ was dispersed in isopropanol, in ambient conditions, at a ratio of 10 g of clay per 100 g of solvent, and 70 g of Titanium IV Isopropylate (TPT) were added to the dispersion. The dispersion was stirred for 5 min; 18 g of $H_2O$ were added, where the gelation in ambient conditions was observed; subsequently, it was dried at 60 °C for 24h and calcined at 500 °C for 1 h.

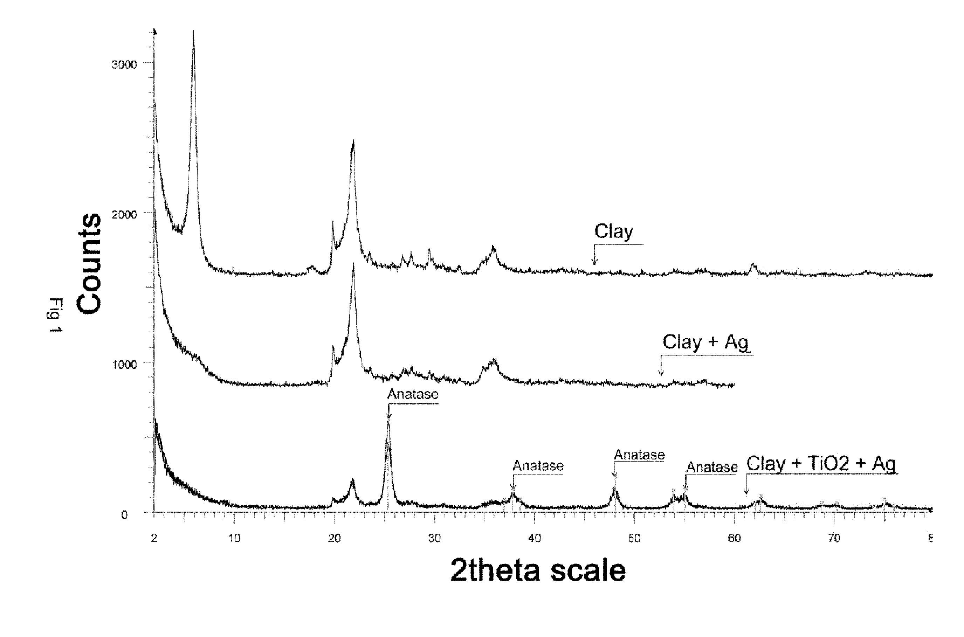

The clay obtained was characterized by X-ray diffraction (Figure 1) and by X-ray fluorescence (Table 2). The diffractograms of Figure 1 demonstrate that the modifying agents (silver and titanium oxide particles) and the thermal treatment have caused a disorganization of the layers of clay indicated by the disappearance of the base peak characteristic of the unmodified clay. Furthermore, it shows the anatase phase of $TiO_2$, obtained after calcination. A content of 49.46 % titanium oxide in the clays, as well as a content of 1.40 % silver, was observed by X-ray fluorescence (Table 2).

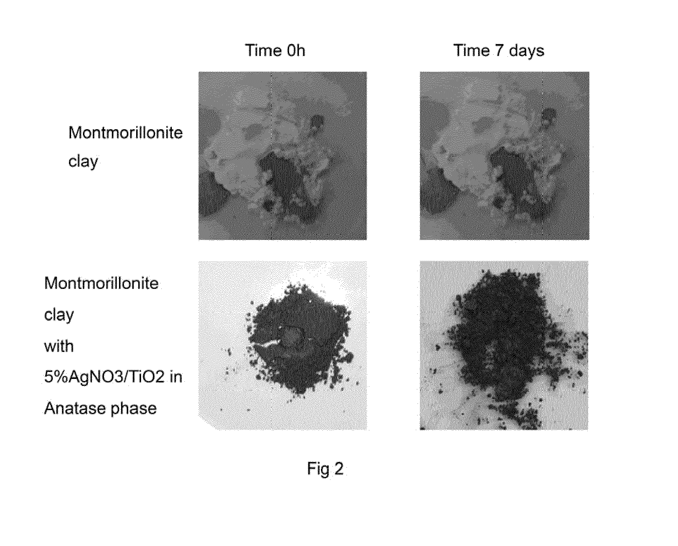

Another study determined the photocatalytic capacity of this clay with 5 % silver nitrate and around 50 % titanium oxide in anatase phase against UV radiation. The degradation of the organic matter based on coffee was studied. Figure 2 shows the images of the control clay in accordance with the UV irradiation time. As well as the clay with the titanium oxide and silver in accordance with the irradiation time. From Figure 2, it can be observed that the clay with titanium oxide in anatase phase degrades the coffee stain after 7 days. However, the clay without titanium oxide continues to show the coffee stain.

Table 2

| Clay with Ag/TiO$_2$ | |
|---|---|
| Formula | (%)Concentration |
| TiO$_2$ | 49.46 |
| SiO$_2$ | 37.32 |
| Al$_2$O$_3$ | 5.34 |
| MgO | 1.53 |
| Ag | 1.40 |
| CaO | 0.66 |
| K$_2$O | 0.50 |
| Fe$_2$O$_3$ | 0.30 |
| Na$_2$O | 0.07 |
| SO$_3$ | 0.04 |
| Cl | 0.02 |
| Br | 0.02 |
| MnO | 0.01 |

Table 2: X-ray fluorescence (WAXS) obtained from a sample of montmorillonite-type clay modified with titanium oxide and silver nitrate (temperature-resistant antimicrobial) and its later calcination by the method described in Example 1. In this table we can observe the content of 49.46 % titanium oxide, as well as a content of 1.40 % Ag.

Example 2: (Reference example) Synthesis and intercalation of titanium oxide in montmorillonite-type and kaolinite-type clays calcined at 500 °C for 1 h obtaining the anatase phase of $TiO_2$ and subsequently modified with 5 % by mass of silver nitrate.

The montmorillonite and kaolinite clays (treated with dimethylsulfoxide) are suspended in isopropanol with a ratio of 10 g of clay in 100 ml of solvent. 70 g of Titanium IV Isopropylate (TPT) is added to the dispersion. The dispersion was stirred for 5 min; 18 g of $H_2O$ was added, where the gelation in ambient conditions was observed; subsequently, it was dried at 60 °C for 24h and calcined at 500 °C for 1 h. Finally, they were modified with 5 % silver nitrate, in ambient conditions, at a ratio of 1 g of $AgNO_3$ per 100 ml of $H_2O$ and 20 g of the calcined clay. The dispersion was maintained in reflux for 6 hours at 70 °C. Finally it was filtered by suction vacuum and dried at 70 °C.

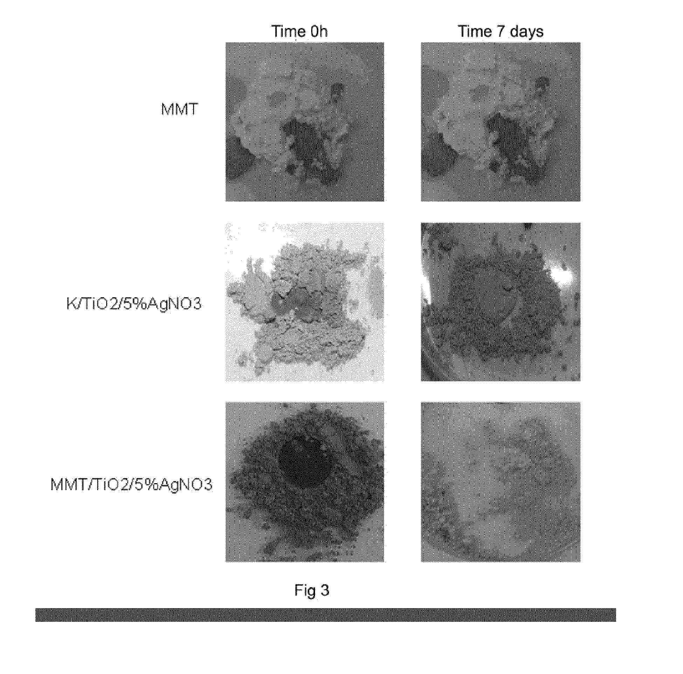

The photocatalytic capacity was determined of this clay containing around 50 % titanium oxide in anatase phase and 5 % silver nitrate and against UV radiation. The degradation of the organic matter based on coffee was studied. Figure 3 shows the images of the control clay in accordance with the UV irradiation time. As well as the clay with the titanium oxide and silver and in accordance with the irradiation time. From Figure 3, it can be observed that the clay with titanium oxide in anatase phase degrades the coffee stain after 7 days, the same as with pure titanium oxide. However, the clay without titanium oxide continues to show the coffee stain.

Furthermore, the antimicrobial efficacy was evaluated of coatings on enamels at a ratio of 0.2 g of clay per square metre following the ISO 22196 method. For this purpose, 5x5 cm pieces of enamel coated with a varnish incorporating the clays developed were inoculated with *Staphylococcus aureus* (CECT 86T, approximately 1*105 colony forming units per piece). These samples were incubated at 37 °C for 24 hours at a relative humidity of 100 %. Then, the final bacterial concentration in each of the test tubes was counted by serial dilutions and plate inoculation. Using this methodology it is considered that a product/ sample has antimicrobial efficacy when the value of R obtained (log(CFU/mL of control sample/ CFU/mL of test sample) is equal to or greater than 2, which corresponds to a final microbial reduction $\geq 99$ %. According to the results obtained, both clays with titanium oxide and silver showed a high antimicrobial efficacy according to the test conditions established by the standard. However, the samples with titanium dioxide did not show detectable antimicrobial activity. The results are shown in Table 3.

Table 3. Antimicrobial efficacy of enamels with coatings with the clays obtained against the growth of S. *aureus*

| Samples | CFU/mL | CFU/mL | CFU/mL | Mean | R |
|---|---|---|---|---|---|
| Coated enamels without clay (control) | 5.20E + 06 | 1.84E+07 | 1.56E+07 | 1.31E+07 | - |
| Cao-DMSO/TPT/ISO -OH calc. 5 % AgNO$_3$ | 10 | 10 | 10 | 10 | 6.12 |
| Mmt/TPT/ISO-OH calc. 5 % AgNO$_3$ | 10 | 10 | 10 | 10 | 6.12 |
| TiO$_2$ | 9.20E + 06 | 1.24E+07 | 1.68E+07 | 1.28E+07 | 0.01 |

Example 3: (Reference Example) Development of nanocomposites based on PVA and LDPE and clays modified with titanium and silver and clays modified with titanium and cerium.

PVA films were prepared with a thickness of around 100 $\mu$m by the casting method, using water as solvent. The weight proportion of clay is 10 % with respect to the polymer. The clay was added to the water, it was dispersed with the aid of ultraturrax and the proportional part of PVA was added. The solution was stirred at 70 °C for 2 hours. Subsequently, the casting was performed in Petri dish, obtaining the films by evaporation of the solvent (water) after 24 hours.

The LDPE films were prepared by melt mixing in an internal mixer and later pressing. The processing conditions were 150 °C, 100 rpm and 5 min.

The clays used for this study were prepared following the process of Example 1 and the process of Example 5.

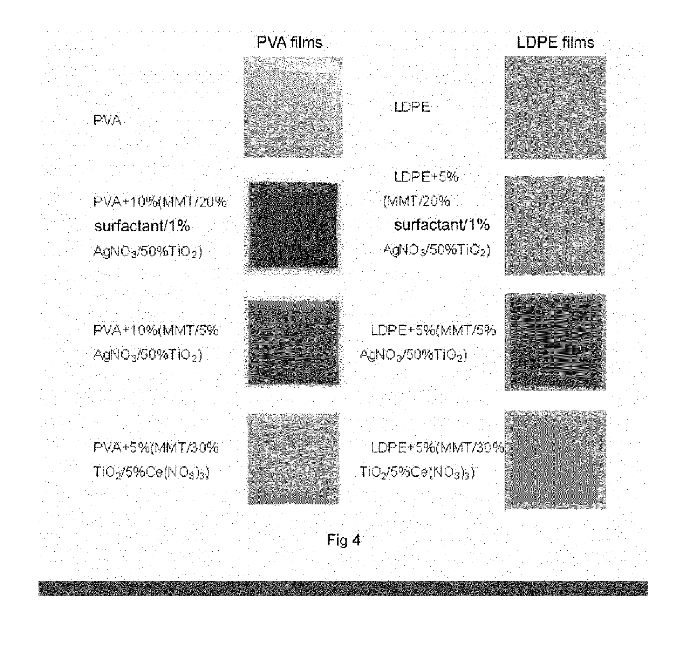

The dispersion was studied of these clays modified with titanium and silver, observing good morphology and homogeneity in the films of the nanocomposites, as observed in Figure 4.

Example 4: (Reference Example) Development of ceramic coatings based on varnishes and clays modified with titanium and silver.

Varnishes were prepared with the modified clays following the process of Example 1 and Example 2. The weight proportion of the clay is around 5 % with respect to the varnish. The clay was added to the varnish, magnetic stirring was applied for 5 minutes. Subsequently, the coatings were performed on the ceramic materials.

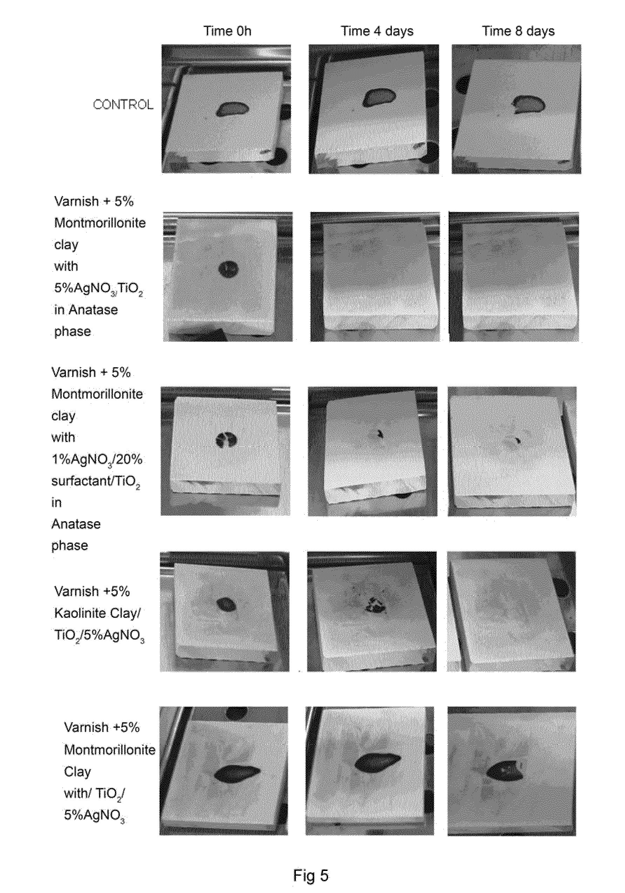

The photocatalytic capacity was determined of these ceramic coatings with the clay containing around 50 % titanium oxide in anatase phase and in some cases also 5 % silver nitrate and against UV radiation in a Xenon aging chamber. The degradation of the organic matter based on coffee was studied. In Figure 5, it can be observed that the ceramic coatings with clay with titanium oxide in anatase phase degrade the coffee stain after 4 days. However, the clay without titanium oxide (control) continues to show the coffee stain. Furthermore, the clays with greater silver content, degrade the stain more efficaciously after 4 days. In the case of the clays with titanium and without silver, degradation of the stain is observed after 8 days. This indicates that clays containing silver together with titanium accelerate the photocatalytic effect and are more effective. Example 5: (Reference Example) Synthesis and intercalation of titanium oxide in montmorillonite-type and kaolinite-type clays calcined at 500 °C for 1 h obtaining the anatase phase of TiO$_2$ and subsequently modified with 5 % by mass of cerium nitrate (Ce(NO$_3$)$_2$).

The montmorillonite clays (previously modified with 20 % by weight of CTAB) and kaolinites (treated with dimethylsulfoxide) are suspended in isopropanol with a ratio of 10 g of clay in 100 ml of solvent. 70 g of Titanium IV Isopropylate (TPT) is added to the dispersion. The dispersion was stirred for 5 min; 18 g of H$_2$O was added, where the gelation in ambient conditions was observed; subsequently, it was dried at 60 °C for 24h and calcined at 500 °C for 1 h. Finally they were modified with 5 % silver nitrate, in ambient conditions, at a ratio of 1 g of Ce(NO$_3$)$_3$ per 100 ml of H$_2$O and 20 g of the calcined clay. The dispersion was maintained in reflux for 6 hours at 70 °C. Finally, it was suction filtered and vacuum dried at 70 °C.

Table 4

| Formula | Concentration |
| --- | --- |
| $TiO_2$ | 41.65 % |
| $SiO_2$ | 28.14 % |
| $Al_2O_3$ | 4.14 % |
| $CeO_2$ | 1.66 % |
| MgO | 0.96 % |
| $K_2O$ | 0.48 % |
| $Fe_2O_3$ | 0.27 % |
| CaO | 0.24 % |
| Br | 0.18 % |
| LOI | 8.5 |

Table 4 shows the results of the chemical analysis by X-ray fluorescence performed in the montmorillonite-type clay prepared according to the aforementioned process.

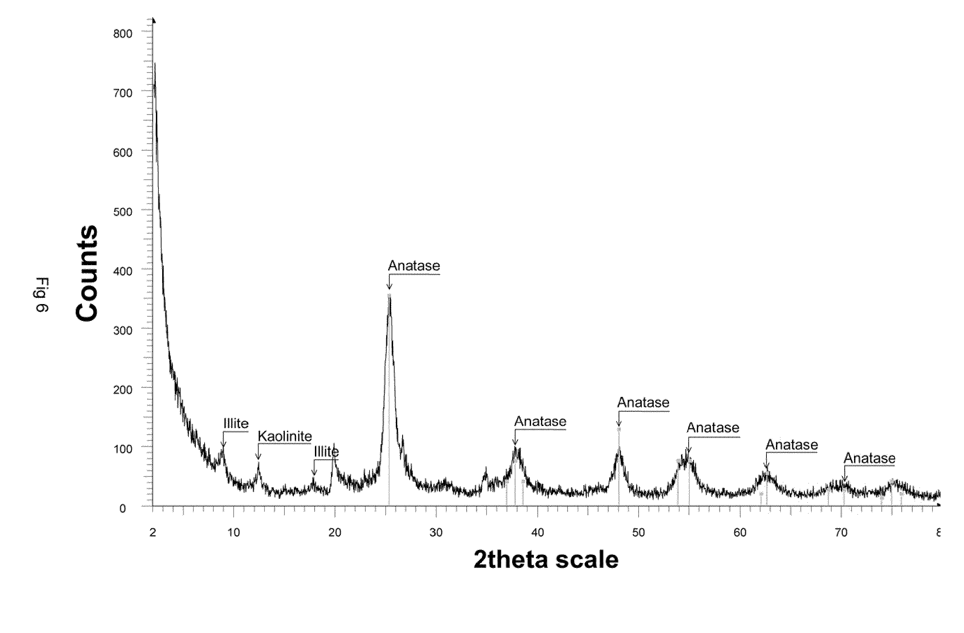

Figure 6 shows the X-ray diffractogram of the kaolinite-type clays prepared according to the process described above.

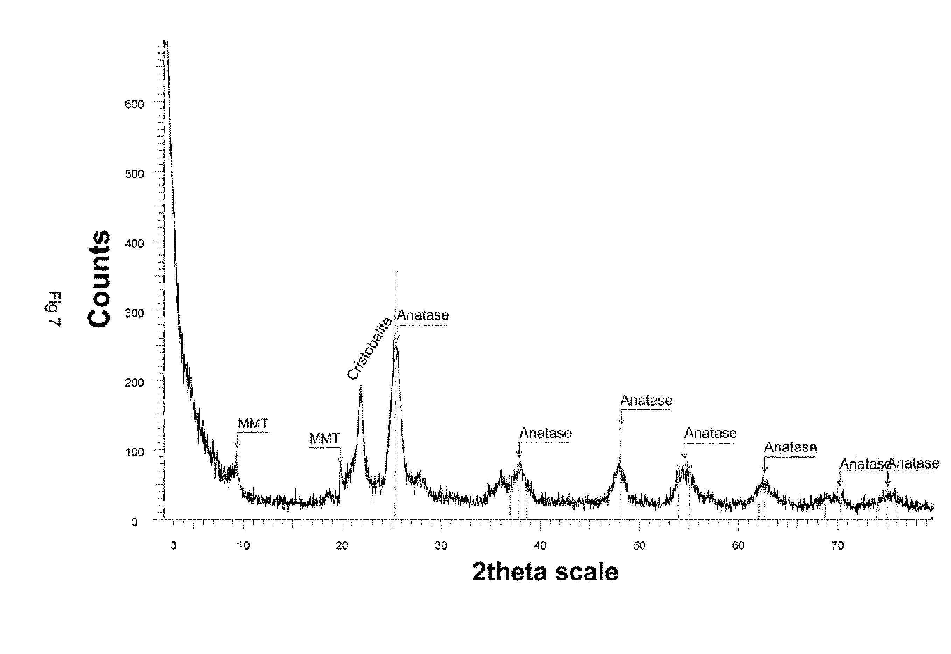

Figure 7 shows the X-ray diffractogram of the montmorillonite-type clays prepared according to the process described above.

Figures 6 and 7 show the presence of the diffraction peaks characteristic of the anatase phase.

The photocatalytic capacity was determined of this clay containing around 50 % titanium oxide in anatase phase and 5 % cerium nitrate and against UV radiation. The degradation of the organic matter based on coffee was studied.

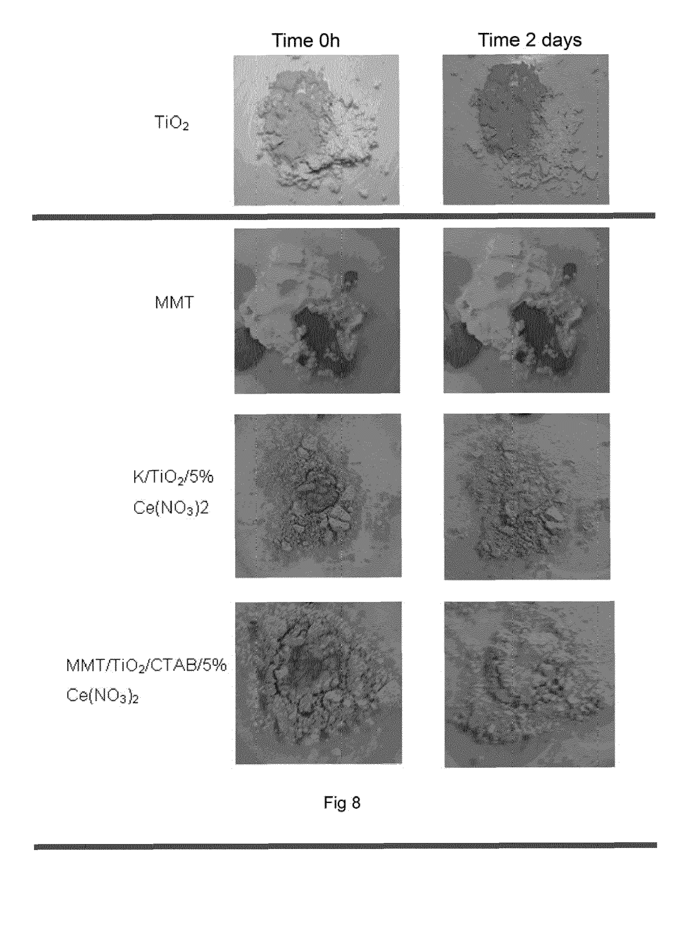

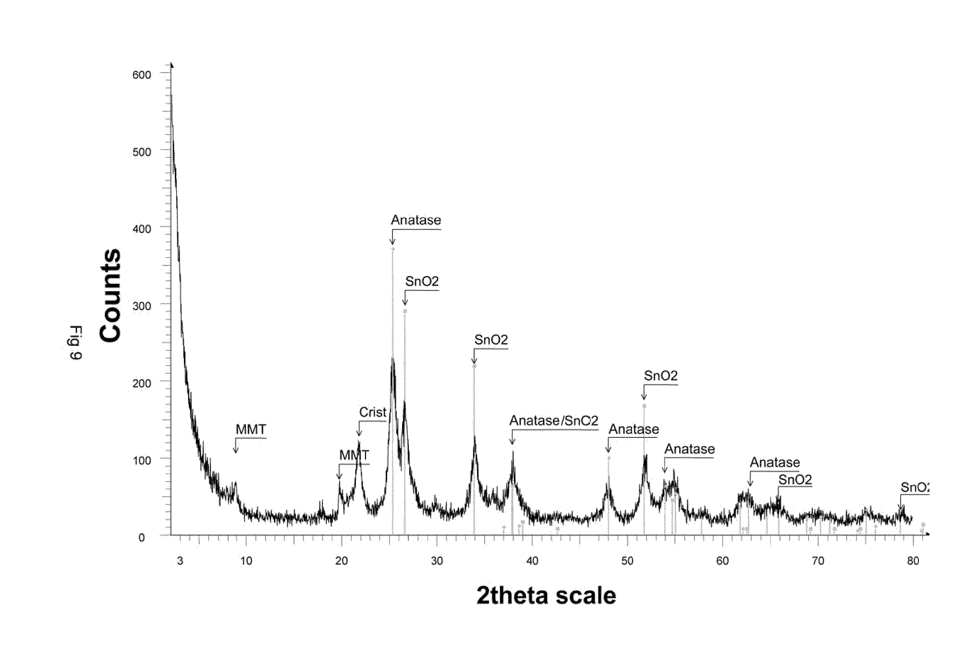

Figure 8 shows the images of the control samples (pure anatase and unmodified montmorillonite clay) in accordance with the UV irradiation time, as well as the clay with the titanium oxide and cerium nitrate. From Figure 9, it can be observed that the clay with titanium oxide in anatase phase and cerium nitrate degrades the coffee stain after 2 days, whilst the pure titanium oxide only partially degrades it. Therefore, the titanium oxide supported on the clay and doped with cerium is more efficient that the pure anatase.

Example 6: (Reference Example) Synthesis and intercalation of tin dioxide ($SnO_2$) in cassiterite phase and titanium oxide ($TiO_2$) in anatase phase in montmorillonite-type clays calcined at 300 °C for 4h.

The montmorillonite clays are suspended in water with a ratio of 20 g of clay in 100 ml of solvent. A solution of tin sulfate ($SnSO_4$) in concentrated hydrochloric acid (37 % vol.) is added. The concentration of $SnSO_4$ is 150 g per litre of HCl solution. After maintaining the mixture of clay suspension and $SnSO_4$ acid solution under stirring at 60 °C for 1.5h, $NH_3$ (28 % vol.) is added until reaching a pH of 8. In this step, the amorphous $SnO_2$ precipitates. The clay and $SnO_2$ precipitate is filtered, washed and dried at 120 °C for 2h. Subsequently, it is calcined at 300 °C for 1h to obtain the casserite crystalline phase. After grinding the powder obtained, 57.5 g of Titanium IV Isopropylate (TPT) are added for every 20 g of clay with $SnO_2$ and it is mixed. Little by little, 400 ml of water is added to the mixture. During this step, the TPT is hydrolyzed to thus obtain $TiO_2$ in amorphous phase. The precipitate is filtered, washed, dried at 120 °C for 2h and is calcined at 300 °C for 4h to obtain the anatase phase.

Table 5 shows the result of the chemical analysis by X-ray fluorescence performed in a clay prepared according to the process described above.

Table 5. Chemical analysis of montmorillonite-type clay modified with $SnO_2$ and $TiO_2$.

| Formula | Concentration |
| --- | --- |
| $TiO_2$ | 41.80 % |
| $SiO_2$ | 33.85 % |
| $SnO_2$ | 16.38 % |
| $Al_2O_3$ | 5.19 % |
| MgO | 1,01 % |
| $Fe_2O_3$ | 0.34 % |
| $K_2O$ | 0.31 % |
| Cl | 0,19 % |
| $SO_3$ | 0.16 % |

(continued)

| Formula | Concentration |
|---------|---------------|
| $Na_2O$ | 0.06 % |
| CaO | 0.05 % |
| MnO | 0.01 % |
| LOI | 2.65 % |

Figure 9 shows the X-ray diffractogram of the clay prepared according to the process described above. It is possible to distinguish the peaks corresponding to the anatase phase of $TiO_2$ and the cassiterite phase of $SnO_2$.

The photocatalytic capacity was determined of this clay containing around 42 % titanium oxide in anatase phase and 16.4 % tin dioxide in cassiterite phase and against UV radiation. The degradation of the organic matter based on coffee was studied.

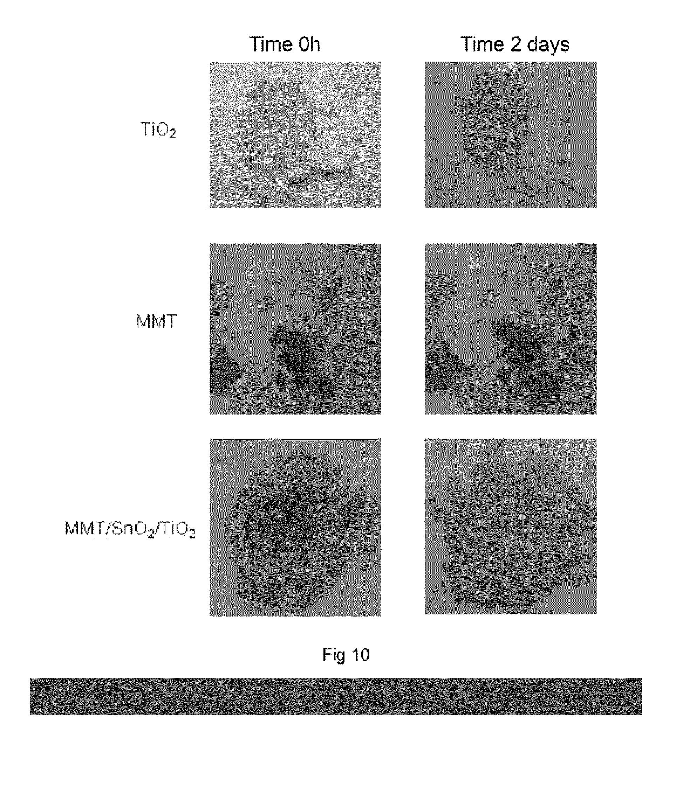

From Figure 10, it can be observed that the clay with titanium oxide in anatase phase and tin dioxide degrades the coffee stain after 2 days, whilst the pure titanium oxide only partially degrades it, showing the better efficacy of the anatase deposited in the clay and doped with tin. The unmodified clay continues to show the coffee stain.

Example 7: (Reference Example) Synthesis and intercalation of zirconium dioxide ($ZrO_2$) in kaolinite-type clays calcined at 600 °C for 4h.

The kaolinite clay is suspended in water with a ratio of 20 g of clay in 100 ml of solvent. A solution of zirconium oxynitrate ($ZrO(NO_3)_2$) in water (12.7 g of $ZrO(NO_3)_2$ in 200 ml of water) is added. After maintaining the mixture of clay suspension and $ZrO(NO_3)_2$ solution under stirring at 60 °C for 1h, $NH_3$ (28 % vol.) is added until reaching a pH of 10. The mixture is maintained in suspension for 1h and during this time the ZrOH precipitates. The clay and ZrOH precipitate is filtered, washed and dried at 120 °C for 2h. Subsequently, it is calcined at 600 °C for 4h to obtain $ZrO_2$.

Table 6 shows the result of the chemical analysis by X-ray fluorescence performed in a clay prepared according to the process described above.

Table 6. Chemical analysis of kaolinite-type clay modified with $ZrO_2$.

| Formula | Concentration |
|---------|---------------|
| $SiO_2$ | 38.97 % |
| $Al_2O_3$ | 29.20 % |
| $ZrO_2$ | 20.80 % |
| $K_2O$ | 2.19 % |
| $Fe_2O_3$ | 1.06 % |
| $TiO_2$ | 0.96 % |
| MgO | 0.59 % |
| $Na_2O$ | 0.45 % |
| CaO | 0.35 % |
| $SO_3$ | 0.07 % |
| Cl | 0.02 % |
| LOI | 3 % |

Example 8: (Reference Example) Synthesis and intercalation of zinc oxide (ZnO) in kaolinite-type clays (pretreated with DMSO).

A zinc nitrate solution ($Zn(NO_3)_2$) is prepared with a ratio of 13.08 g of $Zn(NO_3)_2$ in 400ml of water. Then, 25 g kaolinite clay (pretreated with DMSO) is suspended in the $Zn(NO_3)_2$ solution. After maintaining the suspension mixture under stirring at 60 °C for 18h, a NaOH solution (24 g of NaOH in 400 ml of water) is added little by little. The mixture is maintained in suspension at 60 °C for 2h and during this time the ZnO precipitates. The clay and ZnO precipitate is filtered, washed in methanol and vacuum dried at 120 °C for 2h.

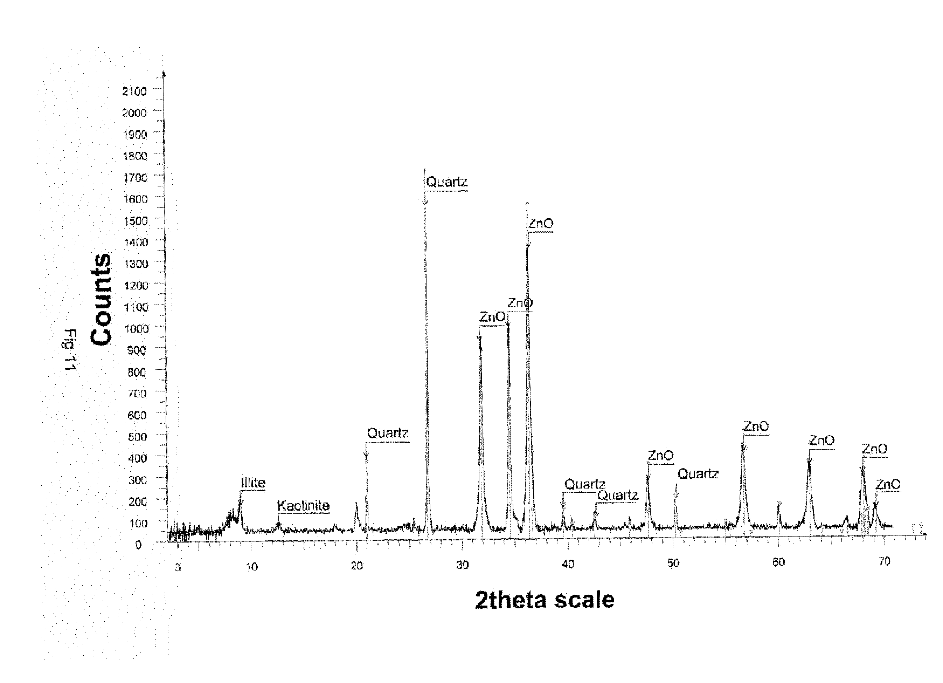

Figure 11 shows the X-ray diffractogram of the clay prepared according to the process described above.

LDPE films and their nanocomposite with 5 % of the aforementioned clay were prepared by melt mixing in an internal mixer and latter pressing. The processing conditions were 150 °C, 100 rpm and 5 min.

EP 2 716 605 A1

The antimicrobial efficacy was evaluated of said films using the ISO 22196 method. For this purpose, samples of 5x5 cm film were inoculated with *Staphylococcus aureus* (CECT 86T, approximately 1*105 colony forming units per piece). These samples were incubated at 37 °C for 24 hours at a relative humidity of 100 %. Then, the final bacterial concentration in each of the test tubes was counted by serial dilutions and plate inoculation. The results obtained are shown in Table 7. According to the results obtained, the LDPE films with 5 % clay with ZnO showed a high antimicrobial efficacy established by the standard. However, the samples of LDPE without clay did not show detectable antimicrobial efficacy.

Table 7. Antimicrobial efficacy of LDPE films with 5 % ZnO clay against the growth of *S. aureus* * (CFU/mL control sample-CFU/mL test sample)/CFU/mL control sample x 100

| Sample | CFU/mL | Mean | % reduction* |
|---|---|---|---|
| LDPE | 1.10E + 07 | | |
| LDPE | 2.10E + 07 | | |
| LDPE | 7.80E + 06 | 1.33E + 07 | - |
| LDPE + 5 % Cao + 30 %ZnO | 1.30E + 06 | | |
| LDPE + 5 % Cao + 30 %ZnO | 1.00E + 04 | | |
| LDPE + 5% Cao + 30 %ZnO | 8.20E + 05 | 7.10E + 05 | 94.65 |

Example 9: Synthesis and intercalation of cerium oxide (IV) (ceria, $CeO_2$) in montmorillonite-type clays, using ammonium hydroxide as oxidizing agent. Preparation of $CeO_2$MMT.

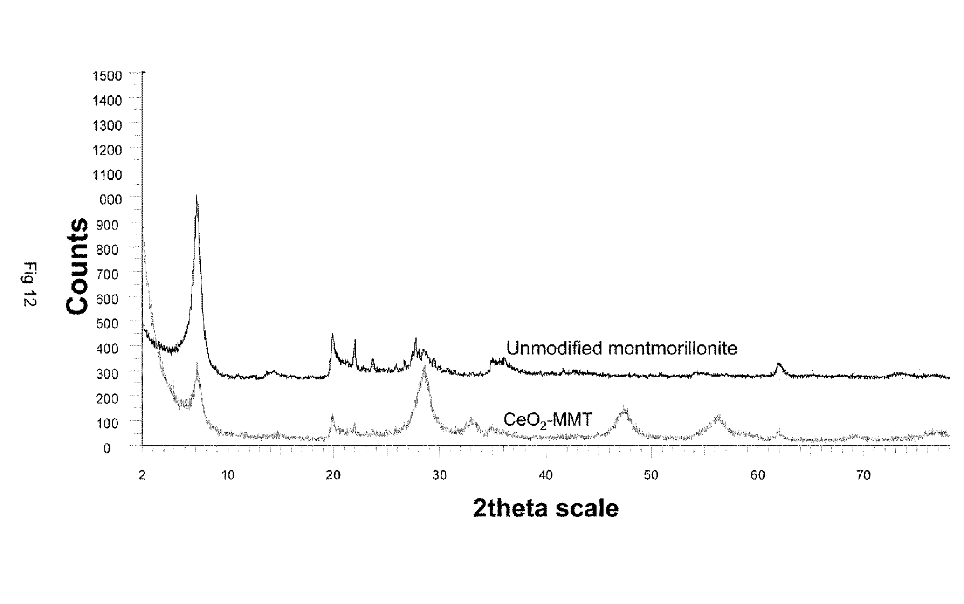

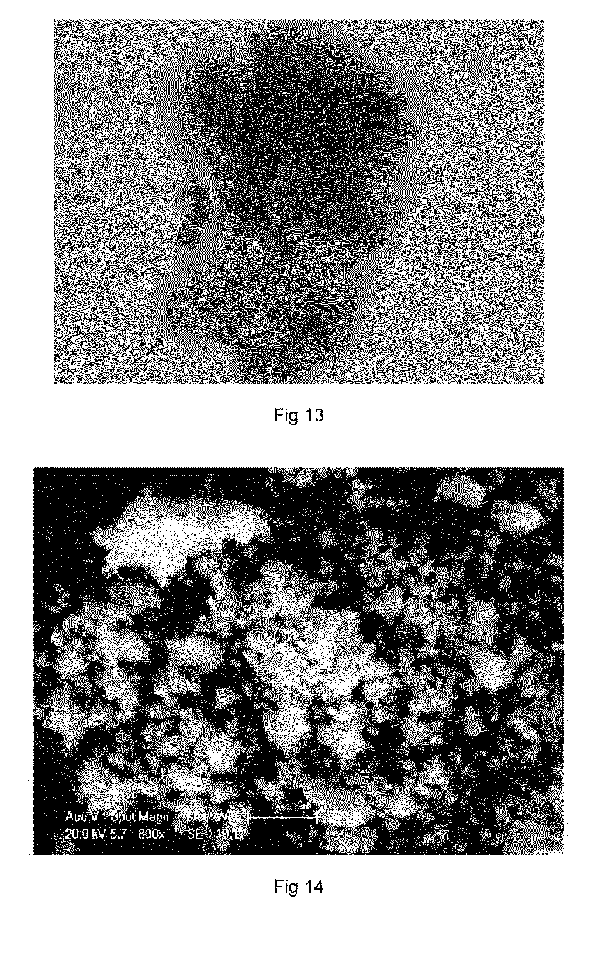

Initially, a 0.6M solution of $Ce(NO_3)_3$*$6H_2O$ was prepared, and the unmodified clay was dispersed in this solution, at a ratio of 0.3 g per ml of solution. The dispersion was stirred for 24 h at 40 °C. Once cold, $NH_4OH$ was added and it was stirred for 24 h. Finally, the clay was suction filtered and dried in a convection oven for 2 h, at 85 °C. The clay obtained was characterized using X-ray diffraction (see Figure 12) and transmission electron microscopy (see Figure 13). The diffractograms of Figure 12 demonstrate that there is no displacement of the base peak after the modification (12.5°, $2\theta$), which indicates that there is no intercalation in the clay of the cerium oxide formed. The resulting material contains $CeO_2$ (cerianite), with typical reflections at 28.64°, 47.29° and 56.40° ($2\theta$).

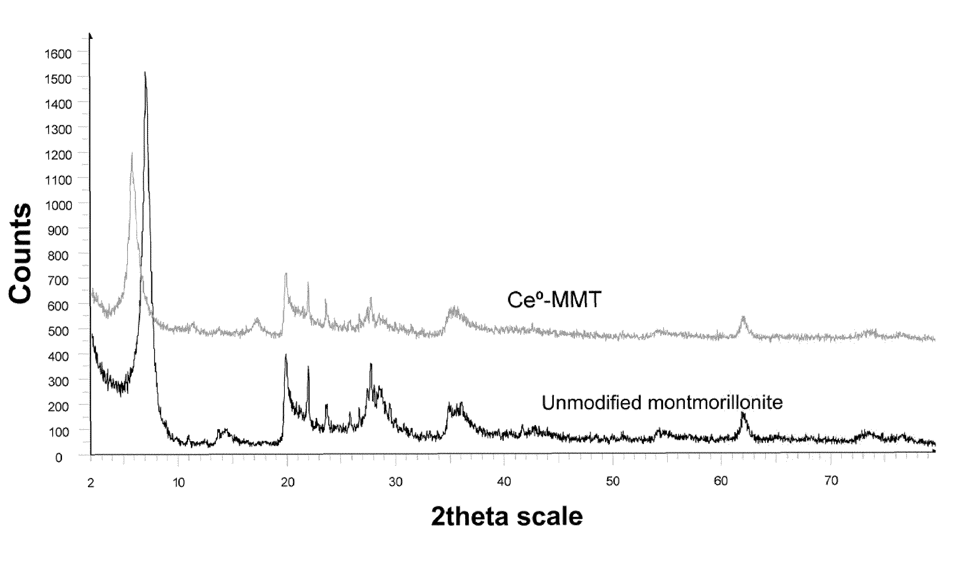

The TEM image of $CeO_2$MMT of Figure 13 shows the typical appearance of the montmorillonite layers. It is not possible to distinguish particles of $CeO_2$ or of other cerium compounds, however, by X-ray diffraction (Figure 12) and EDAX (Figures 14) and in table 8 (EDAX chemical analysis of the surface of the montmorillonite-type clay modified with cerium nitrate, using ammonium hydroxide as oxidizing agent, to obtain cerium oxide/montmorillonite ($CeO_2$-MMT)) it has confirmed the presence of $CeO_2$ in the surface of the layers of the modified clay (15.11 % Ce).

Table 8

| Element | % Weight |
|---|---|
| C K | 6.65 |
| O K | 47.62 |
| Mg K | 1.08 |
| Al K | 3.67 |
| Si K | 25.17 |
| K K | 0.69 |
| Ce L | 15.11 |
| Total | 100.00 |

Example 10: synthesis and intercalation of metallic cerium (Ce°) in montmorillonite-type clays, using ascorbic acid as reducing agent. Preparation of Ce°MMT which totally or partially develop a cerium oxide by oxygen scavenging.

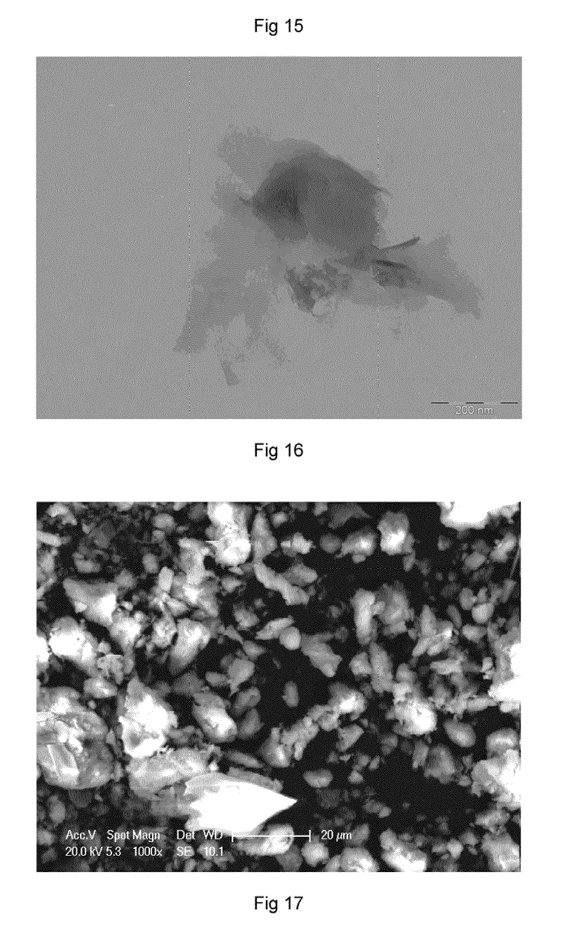

Initially a 0.6M solution of $Ce(NO_3)_3$*$6H_2O$ was prepared, and the unmodified montmorillonite-type clay was dispersed in this solution, at a ratio of 0.1 g per ml of solution. The dispersion was stirred for 24 h at 40 °C, after which an ascorbic acid solution was added. The resulting dispersion was stirred for 6h at 70 °C. Finally, the clay was suction filtered and dried in a vacuum oven. The clay obtained was characterized using X-ray diffraction and it was compared with the unmodified starting clay (see Figure 15) and transmission electron microscopy (see Figure 16). The diffractograms of Figure 15 show displacement of the base peak of 7.03° to 5.67° (2θ), which corresponds to an increase of the interlayer distance as a consequence of the modification. Using X-ray diffraction it has not been possible to identify the cerium compound(s) which are in the interior of the clay galleries, nor have crystalline by-products of the reaction been detected.

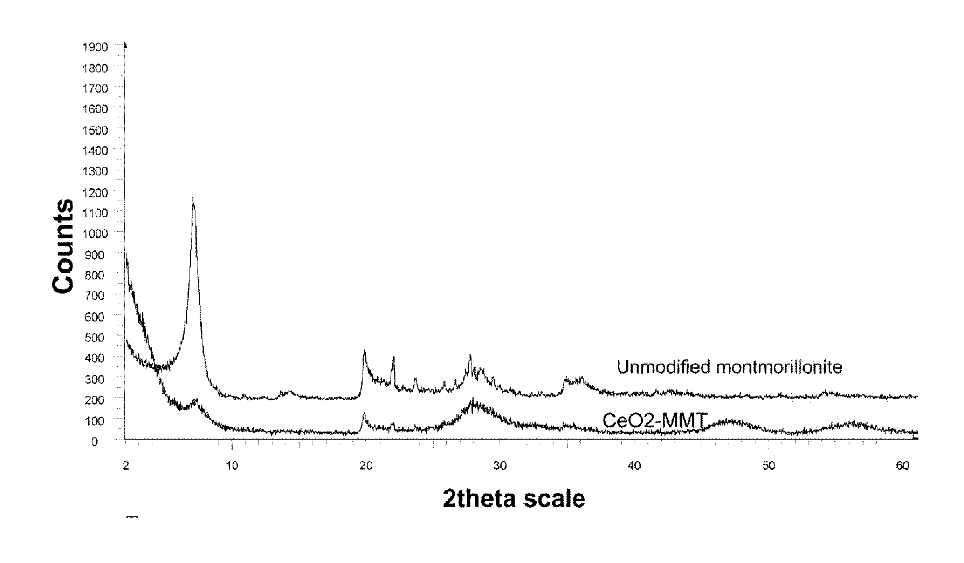

The TEM image of Ce°MMT shows the typical appearance of the montmorillonite layers. There is no morphological evidence of the modification process with cerium and of the later reduction with ascorbic acid. However, on analysing the surface of the modified clay by EDAX (Figure 17) and in table 9 (chemical analysis EDAX of the surface of the montmorillonite-type clay modified with cerium nitrate, using ascorbic acid as reducing agent, to obtain metallic cerium montmorillonite (Ce°-MMT) it has confirmed the presence of Ce (4.95 %).

Table 9

| Element | % Weight |
|---------|----------|
| C K | 58.25 |
| O K | 0.86 |
| Mg K | 1.19 |
| Al K | 10.45 |
| Si K | 23.58 |
| K K | 0.72 |
| Ce L | 4.95 |
| Total | 100.00 |

Example 11: Synthesis and intercalation of cerium oxide (IV) (ceria, $CeO_2$) in montmorillonite-type clays, using ammonium hydroxide and high temperature as oxidizing agents. Preparation of $CeO_2$-MMT.

A 0.3 M solution of $(NH_4)_2[Ce(NO_3)_6]$ was prepared, and the unmodified clay was dispersed in this solution, at a ratio of 0.06 g per ml of solution. The dispersion was stirred for 24 h at 40 °C. Once cold, $NH_4OH$ was added and was stirred for a further 40 h. Finally, the clay was suction filtered, and calcined at 550 °C in oxidizing atmosphere for 1 h.

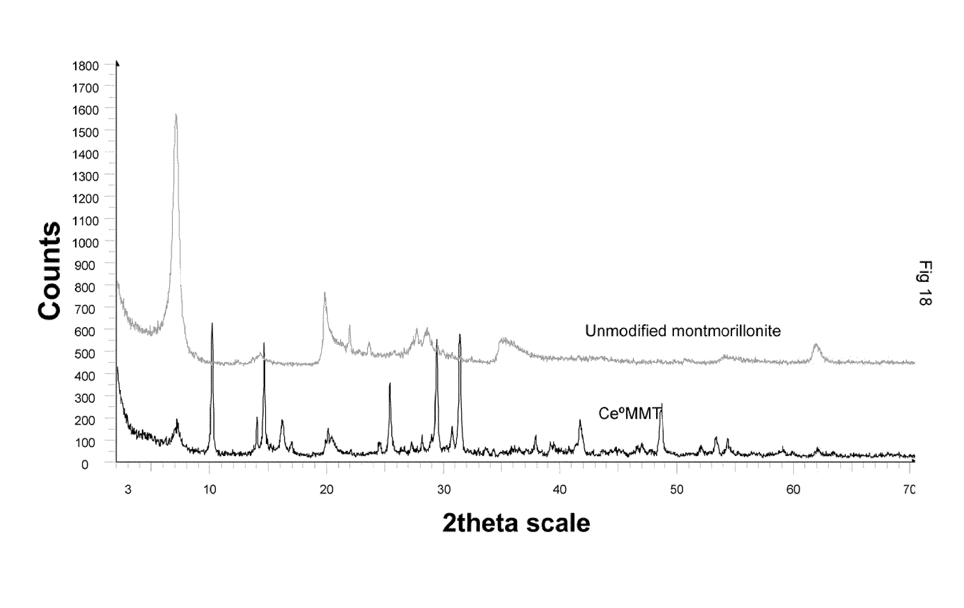

The clay obtained was characterized using X-ray diffraction and it was compared with the unmodified starting clay (see Figure 18). The diffractograms of Figure 18 demonstrate that a disorganization has occurred in the crystalline structure as a consequence of the chemical and thermal treatment applied to obtain the cerium oxide (IV) supported on the clay. This disorganization is demonstrated by the widening of the low-angle reflections. The chemical analysis of the clay $CeO_2MMT$ obtained by this method indicates that it contains 16 % Ce. Example 12: Synthesis and intercalation of metallic cerium (Ce°) in montmorillonite-type clays, using sodium bisulfite as reducing agent which totally or partially develop a cerium oxide by oxygen scavenging. Preparation of Ce°MMT.

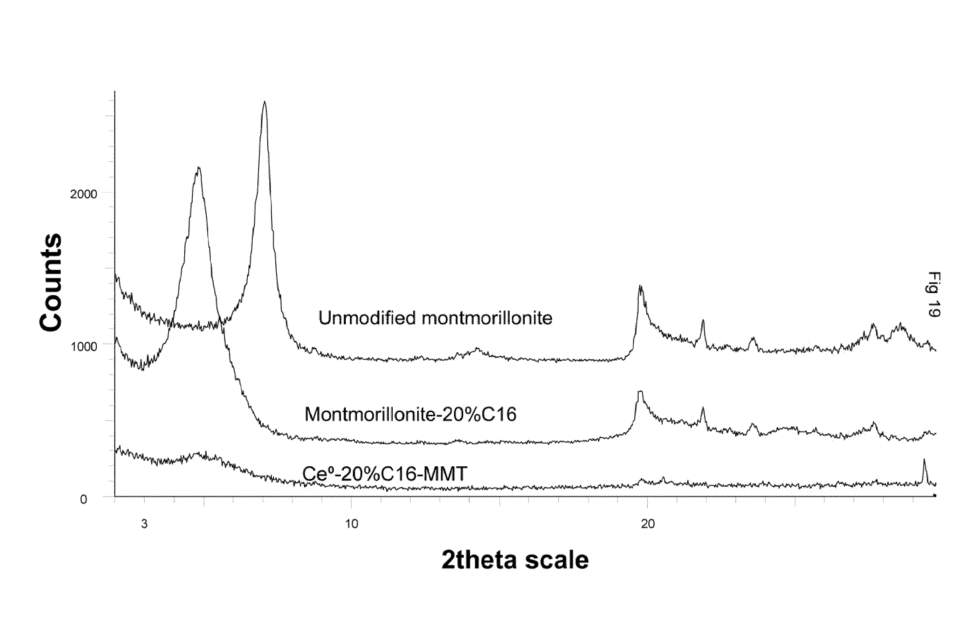

Initially, a 0.6M solution of $Ce(NO_3)_3 \cdot 6H_2O$ was prepared, and the unmodified montmorillonite-type clay was dispersed in this solution, at a ratio of 0.06 g per ml of solution. The dispersion was stirred for 24 h at 40 °C, after which a 12 % w/w solution of sodium bisulfite was added. The resulting dispersion was stirred for 4 h at 40 °C. Finally, the clay was suction filtered and dried in a vacuum oven for 2 h, at 85 °C. The clay obtained was characterized using X-ray diffraction and it was compared with the unmodified starting clay (see Figure 19). The diffractograms of Figure 19 show displacement of the base peak of 7.02° at 7.20 (2θ), which corresponds to a change in the interlayer distance as a consequence of the treatment.

Example 13: Synthesis and intercalation of metallic cerium (Ce°) in montmorillonite-type clays organomodified with 20 % hexadecyltrimethylammonium bromide (CTAB), using sodium borohydride as reducing agent which totally or partially develop a cerium oxide by oxygen scavenging. Preparation of Ce°-20 %CTAB-MMT.

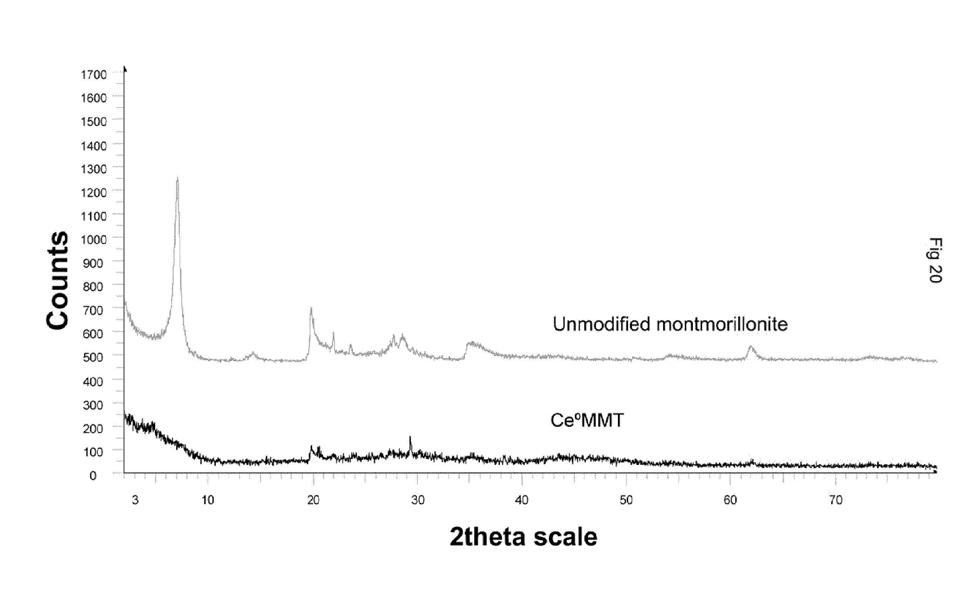

Initially a 0.6M solution of $Ce(NO_3)_6 \cdot 6H_2O$ was prepared and montmorillonite-type clay previously modified with 20 % hexadecyltrimethylammonium bromide (CTAB) was dispersed in this solution, at a ratio of 0.13 g per ml of solution. The dispersion was stirred for 24 h at 40 °C, after which a food-grade anti-foaming agent was added at a ratio of 0.5 % w/w and nitrogen started to be bubbled in the dispersion. A 10 % w/w solution of sodium borohydride was slowly added. The resulting dispersion was stirred for 2h at ambient temperature. Finally, the clay was suction filtered and dried in a vacuum oven for 2 h, at 85 °C. The clay obtained was characterized using X-ray diffraction and it was compared with the starting clay as well as with the unmodified clay (see Figure 20). The diffractograms of Figure 20 show that the modification of the natural clay with hexadecyltrimethylammonium bromide (CTAB) entails an opening of the interlayer distance (displacement of the base reflection at lower angles). However, the later modification with cerium nitrate and later reduction with sodium borohydride of the clay organomodified with CTAB causes disorganization in the layered structure of the clay, which is evident from the low intensity and width of the base peak.

Example 14: Synthesis and intercalation of metallic cerium (Ce°) in montmorillonite-type clays, using sodium borohydride as reducing agent which totally or partially develop a cerium oxide by oxygen scavenging. Preparation of Ce°MMT.

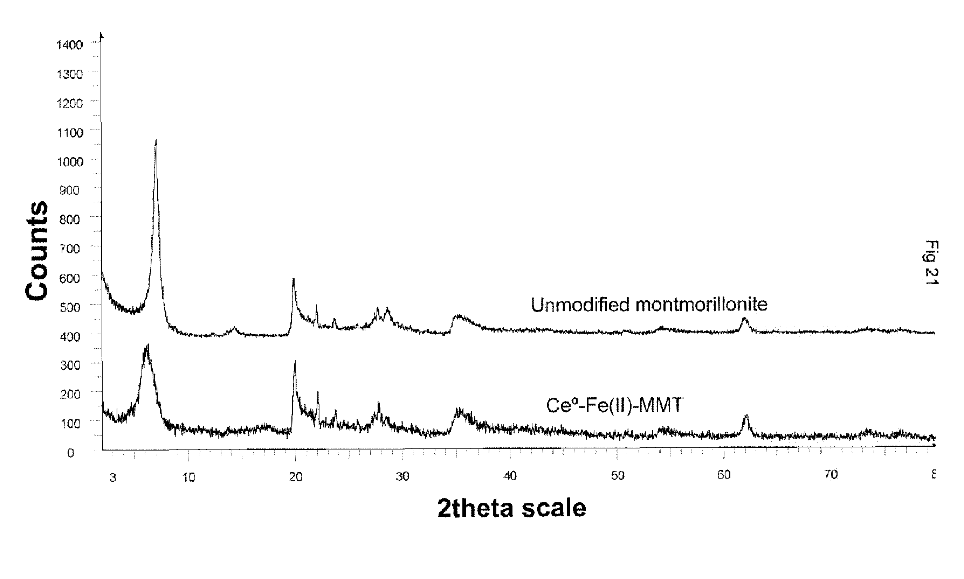

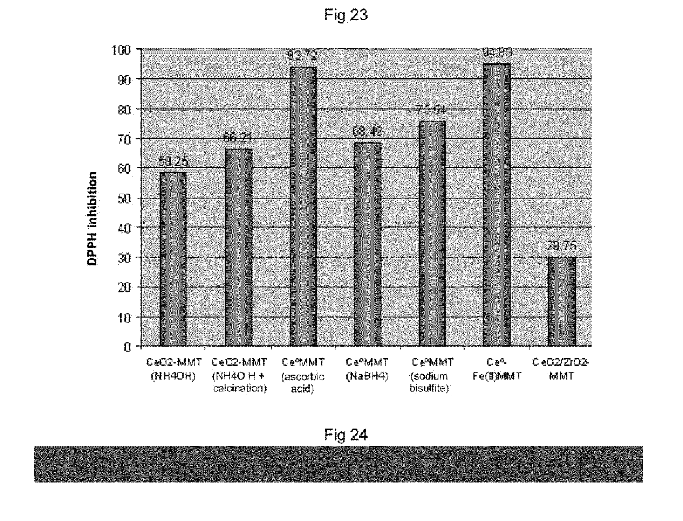

Initially, a 0.6M solution of $Ce(NO_3)_3*6H_2O$ was prepared, and the unmodified montmorillonite-type clay was dispersed in this solution, at a ratio of 0.06 g per ml of solution. The dispersion was stirred for 24 h at 40 °C, after which the heat source was removed and nitrogen started to be bubbled in the dispersion. Keeping the nitrogen bubbling and constant stirring, a 10 % w/w solution of sodium borohydride was slowly added. The resulting dispersion was stirred for 2h at ambient temperature. Finally, the clay was suction filtered, washed with acetone and dried in a vacuum oven for 2 h, at 85 °C. The clay obtained was characterized using X-ray diffraction and it was compared with the unmodified starting clay (see Figure 21). To judge by the diffractograms of Figure 23 the treatment of cerium intercalation (III) followed by reduction with sodium borohydride causes total disorganization of the layered structure of the clay.

Example 15: Synthesis and intercalation of metallic cerium (Ce°) and iron (II) (Fe(II)) in montmorillonite-type clays, using ascorbic acid as reducing agent which totally or partially develop a cerium oxide by oxygen scavenging. Preparation of Ce°-Fe(II)MMT.

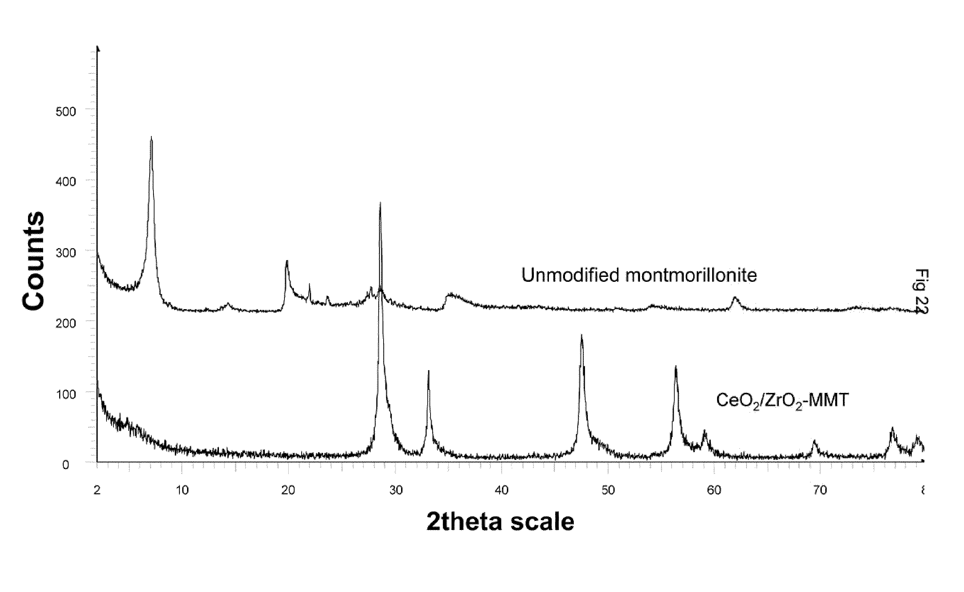

Initially, a 0.6M solution of $Ce(NO_3)_3 \cdot 6H_2O$ and a 0.85M solution of $FeCl_3 \cdot 6H_2O$ were prepared. The metal solutions were mixed and the montmorillonite-type clay was dispersed in this mixture, at a ratio of 0.06 g per ml of solution. The dispersion was stirred for 24 h at 40 °C, after which a 30 % w/w solution of ascorbic acid was added. The resulting dispersion was stirred for 4h at 70 °C. Finally, the clay was suction filtered, washed with acetone and dried in a vacuum oven for 2 h, at 85 °C. The clay obtained was characterized using X-ray diffraction and it was compared with the unmodified starting clay (see Figure 22). The diffractograms of Figure 22 show displacement of the base peak of the modified clay, of 7.07° to 6.07° (2θ), which corresponds to an opening of the interlayer distance of 0.2 A as a consequence of the intercalation of reaction products. The chemical analysis of the clay reveals 8.72 % Ce and 2.74 % Fe.

Example 16: Synthesis and intercalation of cerium oxide (IV) (ceria, $CeO_2$) and zirconium oxide ($ZrO_2$) in montmorillonite-type clays, using ammonium hydroxide as oxidizing agent. Preparation of $CeO_2/ZrO_2$-MMT.

Initially, a 0.6 M solution of $CeCl_3*7H_2O$ and 0.4 M of $ZrO(NO_3)_2$ was added, and the unmodified clay was dispersed in this solution, at a ratio of 0.1 g per ml of solution. The dispersion was stirred for 6 h at ambient temperature Subsequently, $NH_4OH$ was added, drop by drop, and under constant stirring, until reaching pH 9. Finally, the clay was suction filtered, dried at 60 °C in a convection oven for 1h and then at 120 °C for 12 h. Finally, the clay was calcined at 600 °C for 4 h. The clay obtained was characterized using X-ray diffraction (see Figure 23). The diffractograms of Figure 23 show the change of physical phase due to the effect of heating at 600 °C, a temperature above which the clays suffer dehydroxylation. The characteristic reflections of the mixed cerium and zirconium oxide appear between 29 and 35° (2θ). The chemical analysis of the resulting clay shows 48.15 % Ce and 7.54 % Zr.

Example 17: Preparation of high density polyethylene composites (HDPE) with 10 % Ce°MMT clays (reduced with ascorbic acid, sodium borohydride and sodium bisulfite which totally or partially develop a cerium oxide by oxygen scavenging.

12.6 g of HDPE and 1.4 g of Ce°MMT were added alternatively (the versions reduced with ascorbic acid, sodium borohydride, and sodium bisulfite were used) to the chamber of a plastograph previously preheated to 160 °C, at a mixing rate of 5 rpm. Once the material was added, the shear was increased to 100 rpm and the material was mixed for 3 min. After this time, the melt mixing material was collected and it was transformed into sheets of approx. 100 microns of thickness by compression moulding in a hot-plate hydraulic press. The plates were cooled by immersion in water, dried and kept in a desiccator under vacuum until their characterization.

Example 18: Preparation of polyethylene terephthalate (PET) composites with 15 % Ce°MMT (reduced with ascorbic acid), Ce°MMT (reduced with sodium bisulfite) and Ce°-Fe(II)-MMT (reduced with ascorbic acid) which totally or partially develop a cerium oxide by oxygen scavenging.

12.75 g of HDPE and 2.25 g of cerium clay were alternatively added to the chamber of a plastograph previously preheated to 260 °C, at a mixing rate of 5 rpm. Once the material was added, the shear was increased to 60 rpm and the material was mixed for 3 min. After this time, the melt mixing material was collected and it was transformed into sheets of approx. 100 microns of thickness by compression moulding in a hot-plate hydraulic press, at 260 °C and applying a pressure of 2MPa for 4 minutes. The plates were cooled by immersion in water, dried and kept in a desiccator under vacuum until their characterization.

Example 19: Antioxidant capacity of $CeO_2$-MMT (oxidized with $NH_4OH$, with and without calcination), Ce°MMT (reduced with ascorbic acid), Ce°MMT (reduced with sodium bisulfite), Ce°MMT (reduced with sodium borohydride), Ce°-Fe(II)-MMT (reduced with ascorbic acid) and $CeO_2/ZrO_2$-MMT.

The antioxidant effect due to contact of the cerium clays was determined using the DPPH (2,2-diphenyl-1-picrylhydrazyl) radical scavenging method. To do this, portions of 30 mg of each clay were weighed in 3 ml vials, in triplicate. 1 mL of a 0.05g/L stock solution of DPPH in methanol, whose absorbance at 517 nm is 1.2, were added to each tube. In parallel, three control samples without clay containing 1mL of DPPH were prepared. The samples and the controls were left to incubate in the dark at 24 °C for 24h. Next, the samples were filtered and the absorbances of the supernatant were measured at 517 nm. The results are expressed in % of DPPH inhibition:

$$\% \text{ DPPH inhibition} = (\text{Abs control} - \text{Abs sample})/\text{Abs control}$$

Figure 24 shows that in all cases DPPH inhibition is over 50 %, being particularly high (over 90 %) in the Ce°MMT clays (reduced with ascorbic acid) and the double iron and cerium clay Ce°-Fe(II)MMT. As an exception, the $CeO_2/ZrO_2$-MMT clay showed less antioxidant capacity, although not negligible, in the order of 25 %. The results show that these clays, to a greater or lesser extent, are capable of trapping free radicals, an activity that can be extended to the oxygen free radicals. These clays therefore have antioxidant capacity.

Example 20: Oxygen sequestrating capacity of Ce°MMT (reduced with ascorbic acid), Ce°MMT (reduced with sodium bisulfite), Ce°MMT (reduced with sodium borohydride), Ce°-Fe(II)-MMT (reduced with ascorbic acid) and bisulfite/MMT.

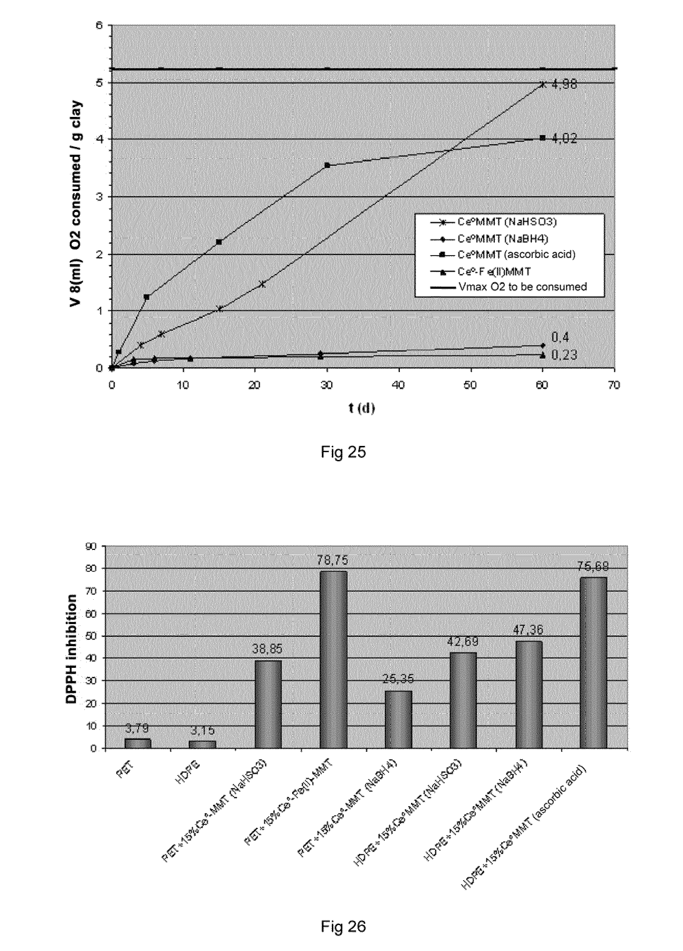

1.5 g of each clay were weighed in duplicate in 40 ml vials. A cell was placed in each vial with 1 ml of water to ensure 100 % relative humidity inside, and each vial was closed with a semaphore-type cap, with open-closed switch and needle inlet. The caps were left in "closed" position for the test. The vials were placed in a space climate controlled at 25 °C, under constant artificial light. The oxygen content was measured between 1 and 60 days, using an oxygen sensor. The sequestrating capacity results (Figure 25) indicate the following oxygen absorption capacity per gram of clay:

$$\text{Ce°MMT (ascorbic acid)} > \text{Ce°MMT (sodium bisulfite)} \gg \text{Ce°-Fe(II)MMT, Ce°}$$
$$\text{(sodium borohydride)}$$

The results show an effect of the agent used to reduce the cerium, the clays treated with bisulfite and ascorbic acid being the most active ones (of those containing Ce°).

Example 21: Antioxidant capacity of HDPE and PET composites with cerium clays.

The antioxidant effect due to contact of the HDPE and PET composites, described in Examples 17 and 18, was determined using the DPPH (2,2- diphenyl-1-picrylhydrazyl) radical scavenging method. To do this, portions of 30mg of each film were weighed in 3 ml vials, in triplicate. 1 mL of a 0.05 g/L stock solution of DPPH in methanol, whose absorbance at 517 nm is 1.2, were added to each tube. In parallel three control samples without film containing 1mL of DPPH were prepared. The samples and the controls were left to incubate in the dark at 24 °C for 24h. Next, the absorbance was measured at 517 nm. The results are expressed in % of DPPH inhibition:

$$\% \text{ DPPH inhibition} = (\text{Abs control} - \text{Abs sample})/\text{Abs control}$$

Figure 26 shows that the composites of PET + 15 % Ce°-Fe(II)MMT and HDPE + 15 % Ce°MMT (ascorbic acid) show greater capacity for scavenging free radicals (DPPH inhibition> 75 %), comparatively with the PET and HDPE composites with Ce°MMT (reduced with $NaBH_4$ and sodium bisulfite), which show medium free radical scavenging capacity (inhibition between 25 and 47 %). These results demonstrate that the composites prepared from PET and HDPE (materials used in food packaging) with clays in Ce° base may have the capacity to scavenge free radicals from oxygen, a condition that may be useful for extending the useful life of food as it delays the oxidation processes.

Example 22: Oxygen sequestrating capacity of the HDPE and PET composites with cerium clays, described in Examples 17 and 18.

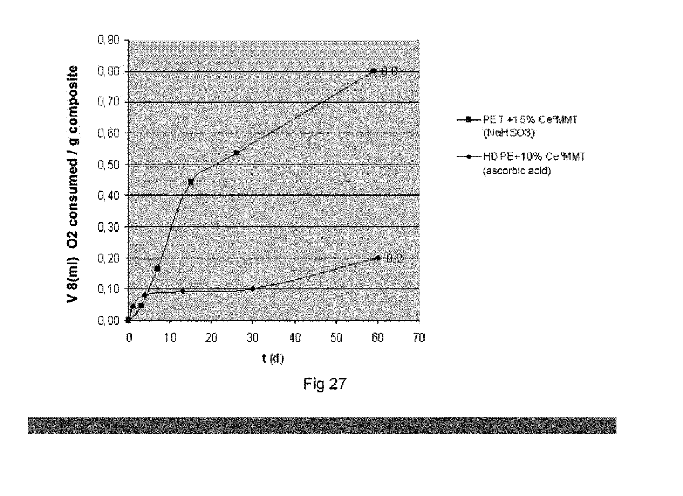

1.5 g of each film were weighed, in duplicate, in 40 ml vials. A cell was placed in each vial with 1 ml of water to ensure 100 % relative humidity inside, and each vial was closed with a semaphore-type cap, with open-closed switch and needle inlet. The caps were left in "closed" position for the test. The vials were placed in a space climate controlled at 25 °C, under constant artificial light. The oxygen content was measured between 1 and 60 days, using an oxygen sensor. The sequestrating capacity results are shown in Figure 27.

The graphic of oxygen volume consumed/g clay vs. Time indicates that the PET composite with Ce°MMT (reduced with bisulfite) consumes up to 0.8ml in 60d. In comparison with the PET, the HDPE composite with the cerium clay a fourth part of oxygen, which can be translated in an effect of the polymeric matrix.

The results indicate that the PET and HDPE composites with the addition of Ce°clays have the capacity to absorb oxygen, a property that may be beneficial in extending the useful life of packaged food which can oxidize.

**Claims**

1. Nanoclays comprising metal oxides intercalated in their structure.

2. Nanoclays according to claim 1, which are selected from the group formed by layered silicates and/or layered double hydroxides.

3. Nanoclays, according to any of claims 1 or 2, wherein the nanoclays are selected from the group formed by clays of montmorillonite, kaolinite, bentonite, smectite, hectorite, sepiolite, gibbsite, dickite, nacrite, saponite, halloysite, vermiculite, mica type, and/or mixtures thereof or with other phyllosilicates, principally, with or without previous organic and/or inorganic surface modification.

4. Nanoclays, according to any of claims 1 to 3, wherein the metals forming the oxides, are selected from groups III to XII of the periodic table, and from magnesium, calcium, aluminium and cerium.

5. Nanoclays, according to any of claims 1 to 4, wherein they further comprise modifying additives that are incorporated in the structure thereof causing a surface modification.

6. Nanoclays, according to claim 5, wherein the modifying additives are selected from the group formed by:

   a) expander precursors;
   b) compatibilizing agents;
   c) functionalizing substances; or
   d) any combination thereof:

7. Nanoclays, according to claim 6, wherein the expander-type precursors are selected from the group formed by: DMSO, ethylene polyoxide, metal salts, NMF, alcohols, acetates, hydrated hydrazine, water, anhydrous hydrazine, carboxymethyl starch, acetamide, starch, DMSO + methanol, hydroxyethyl starch, hexanoic acid, hydroxypropyl starch, acrylamides, adonitol, glucose, archylamide, salicylic acid, caprolactam, glycolic acid, tannic acid, maleic acid, maleic anhydride, lactic acid, adipic acid, acetic acid, acetaldehyde, sorbitan, butyric acid, tetrafluoroethylene, chlorotrifluoroethylene, vinyl pyrrolidone, hexamethylene, vinyl versatate or any combination thereof.

8. Nanoclays, according to any of claims 6 or 7, wherein the expander precursors are selected from the group formed by DMSO, alcohols, acetates, or water or mixture thereof, and metal salts, selected from the group formed by silver, copper, iron, titanium, cerium, zinc, nickel, palladium, calcium, manganese, manganese or cobalt.

9. Nanoclays, according to any of claims 7 or 8, wherein the alcohols are selected from the group formed by: sorbitol, dibenzylidene sorbitol, ethylene glycol, polypropylene glycol, propylene glycol, isopropanol, methanol, ethanol, triethylene glycol, tetraethylene glycol, glycerol, 1,2-propanediol, 1,3-propanediol, polyethylene glycol $M_w$ = 1000, polyethylene glycol $M_w$ = 3400 pipropylene glycol or piethylene glycol.

10. Nanoclays, according to claim 6, wherein the compatibilizing agents are selected from the group formed by:

- PVOH, EVOH and derivatives of the same family;
- biopolymers;
- bioactive materials of biomedical use;
- phosphates of organic salts and phosphonium salts such as phosphine salts;
- natural or synthetic antioxidants;
- quaternary ammonium salts;
- polyethylene glycol esters with monocarboxylic aliphatic acids (C6-C22) and their ammonium and sodium sulphates;
- perfluorooctanoic acid and its ammonium salt;
- chitosan and its derivatives;
- metal salts;
- other particles or nanoparticles with antimicrobial, antioxidant or oxygen sequestrating properties such as micro and nanoparticles of metal compounds;
- and/or any combination of all the above.

11. Nanoclays, according to claim 10, wherein the quaternary ammonium salts are selected from the group formed by hexadecyltrimethylammonium bromide, N-methacryloyloxyethyl-N,N-dimethyl-N-carboxymethylammonium chloride and bis(2-hydroxyethyl)-2-hydroxypropyl-3-(dodecyloxy) methylammonium chloride and the mono- and di-alkyl ammonium chlorides and more preferably di(hydrogenated tallow)dimethylammonium chloride.

12. Nanoclays, according to claim 6, wherein the functionalizing substances are selected from the group formed by:

- ethanol, or ethylene;
- essential oils, preferably thymol, carvacrol, cinnamon derivatives, allyl isocyanate, linalool or mixtures thereof;
- natural reduced-size antimicrobial peptides, preferably bacteriocins or obtained by genetic modification, preferably nisins, enterocins, lacticins or lysozyme;
- natural or synthetic antioxidants, preferably polyphenols, such as resveratrol or flavonoids, plant extracts such as, but without limitation, eugenol or rosemary extracts and vitamins, preferably tocopherols and tocotrienols or ascorbic acid/vitamin C;
- substances with bioactive, therapeutic or pharmacological capacity selected from the group formed by drugs which require controlled release, enzymes, bioavailable calcium compounds, marine oils, probiotics, prebiotics and symbiotics;
- organic and inorganic metal salts and/or oxides and/or metal particles, preferably of silver, copper, cerium, zinc, magnesium, tin, iron, titanium, zirconium, nickel or cobalt, or any combination of the above.

13. Nanocomposite materials comprising the nanoclays according to any of claims 1 to 12 and a plastic or polymeric-type matrix or a ceramic-type matrix.

14. The nanocomposite materials according to claim 13, wherein the plastic or polymeric matrices are selected from the group formed by the following matrices:

- thermoplastic
- thermostable
- elastomeric
- biopolymer

15. The nanocomposite materials according to claim 14, wherein the thermoplastic, thermostable and elastomeric matrices are selected from the following list: polyolefins, polyesters, polyamides, polyimides, polyketones, polyisocyanates, polysulfones, styrenic plastics, phenol resins, amide resins, ureic resins, melamine resins, polyester resins, epoxy resins, polycarbonates, polyvinyl pyrrolidones, epoxy resins, polyacrylates, rubbers and gums, polyurethanes, silicones, aramides, polybutadiene, polyisoprenes, polyacrylonitriles, PVDF, PVA, PVOH, EVOH, PVC or PVDC.

16. The nanocomposite materials according to claim 14, wherein the biopolymers are selected from the group formed by proteins, polysaccharides, lipids and biopolyesters or any combination thereof.

17. The nanocomposite materials, according to any of claims 13 to 16, wherein the plastic matrix is in a weight proportion with respect to the total of the nanocomposite material, of 5 % to 99.99, both values inclusive, preferably in a proportion of 20 % to 99.99 %, both values inclusive, and even more preferably of 90 % to 99.99 %, both values inclusive.

18. The nanocomposite materials according to any of claims 13 to 17, wherein the plastic matrices, the nanoclays are in a proportion from 0.01 % to 95 %, both values inclusive, with respect to the total of the nanocomposite material, preferably from 0.01 % to 80 %, both values inclusive, and more from 0.01 % to 10 %, both values inclusive.

19. The nanocomposite materials, according to claim 13, wherein the ceramic matrices comprise:

   - water,
   - clays,
   - deflocculants,
   - feldspars, and
   - feldspar sands.

20. The nanocomposite materials, according to claim 19, wherein the ceramic matrices further comprise:

   - kaolin,
   - carbonates and
   - zirconium.

21. The nanocomposite materials, according to claim 13, wherein the ceramic matrices comprise:

   - kaolin or a kaolinite (5 %) or montmorillonite (1 %) clay,
   - feldspars,
   - frits:
   - silica and
   - silica sands.

22. The nanocomposite materials, according to any of claims 19 to 21, wherein the ceramic matrix is in a weight proportion with respect to the total of the material of 5 % to 99.99, both values inclusive, preferably of 20 % to 99.99 %, both values inclusive, and more preferably of 65 % to 99.99 %, both values inclusive.

23. The nanocomposite materials, according to any of claims 19 or 20, wherein in the ceramic matrices the nanoclays are in a weight proportion from 0.01 to 95 %, both values inclusive, with respect to the total of the nanocomposite material, preferably between 0.01 % and 80 %, both values inclusive, and more preferably from 0.01 to 35 %, both values inclusive.

24. The nanocomposite materials, according to claim 21, wherein the ceramic matrices the nanoclays are in a weight proportion from 0.01 % to 50 %, both values inclusive, with respect to the total of the nanocomposite material, preferably from 0.01 % to 20 %, both values inclusive, and more preferably from 0.01 to 15 %, both values inclusive.

25. The nanocomposite materials according to any of claims 13 to 24, wherein the matrices of the nanocomposite material further comprise additives with electromagnetic radiation barrier and fire resistance properties and other substances with passive, catalytic, active or bioactive properties additional to the nanoclays, selected from the group formed by:

   - metals,

- metal salts,
- metal oxides with:

- antimicrobial properties such as zinc oxide,
- oxygen sequestrators such as cerium dioxide,
- photocatalytic properties such as titanium dioxide,
- anti-abrasive properties such as zirconium dioxide;

- low molecular weight substances with active or bioactive character selected from ethanol, or ethylene, or of essential-oil type or natural reduced-size antimicrobial peptides or obtained by genetic modification,
- quaternary ammonium salts such as hexadecyltrimethylammonium bromide, N-methacryloyloxyethyl-N,N-dimethyl-N-carboxymethylammonium chloride and bis(2-hydroxyethyl)-2-hydroxypropyl-3-(dodecyloxy) methylammonium chloride and the mono- and di-alkyl ammonium chlorides and more preferably di(hydrogenated tallow)dimethylammonium chloride;
- natural or synthetic antioxidants,
- substances with bioactive, therapeutic or pharmacological capacity selected from the group formed by drugs which require controlled release, enzymes, bioavailable calcium compounds, marine oils, probiotics, prebiotics and symbiotics; or
- any combination thereof.

26. A polymeric or ceramic article comprising the nanocomposite material according to any of claims 13 to 25.

27. Use of the nanoclays of claims 1 to 12, for the manufacturing of nanocomposite materials.

28. Use of the nanocomposite materials of claims 13 to 25, for the manufacturing of polymeric or ceramic articles.

29. Use of the polymeric or ceramic articles of claim 26, in the pharmaceutical, food, automotive, electronics and construction sectors, preferably as containers, plastic coatings, paints, plastic parts and accessories, ceramic surfaces, coatings, enamels, worksurfaces, floor tiles and porcelain sanitary and kitchen ware.

30. Synthesis process of the nanoclays of claims 1 to 12, comprising the following stages:

a) decrease in the size of natural clays by mechanical action until obtaining a particle size under 30 microns in D90;
b) classification of the resulting product in stage a), in vibrating screen, centrifuge, filter press or any other dry or wet filtration system until a range between 0.1 and 100 microns, preferably under 25 microns and more preferably under 7 microns in D90;
c) obtaining layered fines after stage b), either in liquid suspension or in powder via later drying by a wet or dry centrifugation process followed or not by an atomization process with controlled depression or by any other industrial drying process including lyophilization;
d) addition to the layered structures of stage c) in at least one step, of expander-type precursors of claim 7;
e) addition of precursors of the oxides to be intercalated in the nanoclays;
f) oxide formulation by total or partial application of a physical or chemical treatment by sol-gel processes, chemical precipitation or hydrolysis by the addition of acids, bases, oxidizing substances or solvents, reduction followed by total or partial oxidation, hydrothermal precipitation, electrodeposition, annealing at high temperatures (100 - 1200 °C), UV radiation, infrared radiation and/or microwave radiation.

31. The process, according to claim 30, wherein the precursors of stage e) are selected from the group formed by metal alkoxides or organic and/or inorganic salts of metals such as silver, copper, iron, cerium, cobalt, tin, magnesium, palladium, manganese, titanium, nickel, zirconium, zinc or other metals, more preferably the metals are titanium, cerium, zinc and zirconium.

32. The process according to any of claims 30 or 31, wherein the following optional stages can be carried out optionally after stage b):

i) elimination of the organic matter by decanting techniques, collection of supernatant or by chemical reaction with oxidizing substances such as peroxides; and/or.
ii) elimination of the crystalline oxides and hard particles not subject to modification either by means of centrifugation and/or gravimentric processes in solution or by turbo-dryers, preferably by a wet or dry centrifugation process followed or not by an atomization process with controlled depression or by any other industrial drying process including lyophilization.

33. The process according to any of claims 30 to 32, wherein, optionally, a stage iii) of drying of the expanders of stage d) is carried out, after washing or not with water or alcohols.

34. The process according to any of claims 30 to 33, wherein, optionally, after stage f) of oxide formulation, a stage iv) of addition of functionalizing substances with active, bioactive or catalytic character of the activity of the metal oxides is carried out in order that they either intercalate and are fixed or released in controlled manner giving rise to compounds with catalytic, active or bioactive capacity.

35. The process according to any of claims 30 to 34, wherein, optionally, after any of stages d) or f) or iv), an optional stage v) is carried out of intercalation in aqueous base or with polar solvents, of compatibilizing or intercalating agents selected from metal, inorganic, organic or hybrid substances in the layered structure.

36. The process according to any of claims 30 to 35, wherein, optionally, deflocculating agents are added to facilitate processing, such as polyphosphates and/or acrylates.

37. Process for the manufacturing of the nanocomposite materials of claims 13 to 25, comprising the addition of the nanoclays in solid or liquid state of claims 1 to 12 to a plastic or polymeric matrix or to a ceramic matrix.

38. The process according to claim 37, wherein a stage vii) is optionally carried out wherein any type of active and/or bioactive substance are added to the matrix containing the active nanoclays with the intercalated metal oxides, selected from the group formed by active organic and inorganic metal salts, preferably of silver, iron, copper, titanium, zinc, cerium, magnesium, tin, nickel or cobalt, natural or synthetic antioxidant substances.

39. The process according to any of claims 37 or 38, wherein, optionally, when the nanocomposite material is strengthened with nanoclays containing metal salts such as zinc, silver, titanium, cerium, tin, magnesium, zirconium, iron, molybdenum, cobalt or other metals with active or passive properties, a physical or chemical treatment is applied, whether previously performed or not, to change the state of oxidation, totally or partially, of the metal centre intercalated in the plastic or ceramic matrix either before, during or after forming.

40. The process, according to claim 39, wherein the physical or chemical treatments to change the state of oxidation, totally or partially, of the metal centre intercalated in the plastic or ceramic matrix either before, during or after forming are selected from the group formed by: annealing at temperatures of between 100 and 1200 °C, UV radiation, infrared radiation, microwave radiation and/or chemical treatment with acids, bases, oxidizing agents, reducers or solvents.

41. Process for the manufacturing of the polymeric article of claim 26, comprising the addition of the nanoclays of claims 1 to 12, during any of the processing stages of a polymeric or plastic matrix or of a ceramic matrix.

42. The process according to claim 41, wherein processing is carried out by any manufacturing method related to the plastics processing industry such as extrusion, application and curing processes typically used to manufacture and form thermostable materials and elastomers, injection, blowing, compression moulding, resin transfer moulding, calendering, thermal shock, internal ultrasonic mixing, coextrusion, co-injection and any combination thereof.

43. The process according to claim 41, wherein a precipitation of the following is optionally carried out:

- set of nanoclays and modifiers by evaporation, to obtain a powder of the nanoadditive; and/or
- plastic or polymeric matrix in solution comprising the nanoclays with or without the modifiers, by drying methods such as heating and/or centrifugation and/or gravimetric processes in solution or turbo-dryers and/or atomization; by cooling or by addition of a precipitating agent, to obtain a masterbatch or concentrate of the nanoadditive in a plastic matrix.

44. The process according to claim 41, wherein organic and/or inorganic metal salts are added to the ceramic matrices with active passive, or catalytic properties that are accelerators of the activity optionally together with other active or bioactive substances in any of the stages of manufacturing or processing of ceramic articles, they are preferably added during modification of the powders before atomization.

Fig 1

EP 2 716 605 A1

Fig 2

Fig 3

Fig 4

Fig 5

Fig 6

Fig 7

Fig 8

Fig 9

Fig 10

Fig 11

Fig 12

Fig 13

Fig 14

Fig 15

Fig 16

Fig 17

Fig 18

Fig 19

Unmodified montmorillonite

Montmorillonite-20%C16

Ce°-20%C16-MMT

Counts

2000

1000

0

2theta scale

3

10

20

Fig 20

Counts

1700
1600
1500
1400
1300
1200
1100
1000
900
800
700
600
500
400
300
200
100
0

Unmodified montmorillonite

Ce⁰MMT

3    10    20    30    40    50    60    70

2theta scale

Fig 21

Fig 22

Counts

Unmodified montmorillonite

CeO₂/ZrO₂-MMT

2theta scale

## Fig 23

## Fig 24

Fig 25

Fig 26

Fig 27

# INTERNATIONAL SEARCH REPORT

| International application No |
|---|
| PCT/ES2012/070391 |

**A. CLASSIFICATION OF SUBJECT MATTER**
INV. C01B33/38
ADD.

According to International Patent Classification (IPC) or to both national classification and IPC

**B. FIELDS SEARCHED**

Minimum documentation searched (classification system followed by classification symbols)
C01B

Documentation searched other than minimum documentation to the extent that such documents are included in the fields searched

Electronic data base consulted during the international search (name of data base and, where practicable, search terms used)
EPO-Internal

**C. DOCUMENTS CONSIDERED TO BE RELEVANT**

| Category* | Citation of document, with indication, where appropriate, of the relevant passages | Relevant to claim No. |
|---|---|---|
| X | ES 2 335 847 A1 (NNANOBIOMATTERS S L [ES] NANOBIOMATTERS S L [ES]) 5 April 2010 (2010-04-05) page 3, line 30 page 3, line 45 page 4, line 36 - page 7, line 28 ----- | 1-44 |
| X,P | WO 2011/101508 A1 (NANOBIOMATTERS IND S L [ES]; LAGARON CABELLO JOSE MARIA [ES]; LAGARON) 25 August 2011 (2011-08-25) page 11, line 31 - page 12, line 11; claims 1-6,16 ----- | 1-44 |
| X | US 4 176 090 A (LUSSIER ROGER J [US] ET AL) 27 November 1979 (1979-11-27) column 3, line 25 - line 34; claims 1,6,8,13,14 ----- | 1-44 |
| | -/-- | |

| X | Further documents are listed in the continuation of Box C. | | X | See patent family annex. |
|---|---|---|---|---|

* Special categories of cited documents :

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 22 October 2012 | 29/10/2012 |

| Name and mailing address of the ISA/ | Authorized officer |
|---|---|
| European Patent Office, P.B. 5818 Patentlaan 2 NL - 2280 HV Rijswijk Tel. (+31-70) 340-2040, Fax: (+31-70) 340-3016 | Sala, Paolo |

Form PCT/ISA/210 (second sheet) (April 2005)

## INTERNATIONAL SEARCH REPORT

International application No

PCT/ES2012/070391

C(Continuation).    DOCUMENTS CONSIDERED TO BE RELEVANT

| Category* | Citation of document, with indication, where appropriate, of the relevant passages | Relevant to claim No. |
|---|---|---|
| X | US 4 436 832 A (JACOBS PIERRE [BE] ET AL) 13 March 1984 (1984-03-13) column 2, line 36 - line 64; claims 1-3,40; examples 1,3,4 ----- | 1-44 |

Form PCT/ISA/210 (continuation of second sheet) (April 2005)

## INTERNATIONAL SEARCH REPORT
Information on patent family members

International application No

PCT/ES2012/070391

| Patent document cited in search report | | Publication date | Patent family member(s) | | Publication date |
|---|---|---|---|---|---|
| ES 2335847 | A1 | 05-04-2010 | EP | 2332885 A1 | 15-06-2011 |
| | | | ES | 2335847 A1 | 05-04-2010 |
| | | | JP | 2012504671 A | 23-02-2012 |
| | | | US | 2012039975 A1 | 16-02-2012 |
| | | | WO | 2010037890 A1 | 08-04-2010 |
| WO 2011101508 | A1 | 25-08-2011 | AU | 2010346312 A1 | 06-09-2012 |
| | | | CA | 2789516 A1 | 25-08-2011 |
| | | | ES | 2364211 A1 | 29-08-2011 |
| | | | WO | 2011101508 A1 | 25-08-2011 |
| US 4176090 | A | 27-11-1979 | NONE | | |
| US 4436832 | A | 13-03-1984 | CA | 1177224 A1 | 06-11-1984 |
| | | | DE | 73718 T1 | 21-07-1983 |
| | | | EP | 0073718 A1 | 09-03-1983 |
| | | | FR | 2512043 A1 | 04-03-1983 |
| | | | JP | 58045153 A | 16-03-1983 |
| | | | US | 4436832 A | 13-03-1984 |
| | | | US | 4465892 A | 14-08-1984 |

Form PCT/ISA/210 (patent family annex) (April 2005)

**EP 2 716 605 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4739007 A
- WO 2007074184 A1
- WO 2001AU00821 A
- JP 19970160630 B
- US 7306777 B
- CN 101062786
- CN 20091025061
- CN 20061089021
- US 20030382742 A
- JP 20000090198 B
- JP 19970075108 B
- JP 19950205046 B
- JP 19890146790 B

**Non-patent literature cited in the description**

- **OGATA N ; JIMENEZ G ; KAWAI H ; OGIHARA T.** *J Polym Sci Part B: Polym Phys,* 1997
- **SINHA RAY S ; YAMADA K ; OKAMOTO M ; UEDA K.** *Nano Lett,* 2002, vol. 2, 1093-6
- **MESSERSMITH PB ; GIANNELIS EP.** *Chem Mater,* 1993, vol. 5, 1064-6